# EUROPEAN PATENT APPLICATION

(11) **EP 1 117 035 A1**
(43) Date of publication of application: **18.07.2001**
(21) Application number: 00100739.2
(22) Date of filing: 14.01.2000
(51) Int. Cl.: G06F 9/46

(54) **Runtime environment component services**

(71) Applicant: Sun Microsystems, Inc., Palo Alto, California 94303-4900 (US)
(72) Inventor: Hofmann, Ralf, 22143 Hamburg (DE); Schultz, Torsten, 25421 Pinneberg (DE)
(74) Representative: Frank, Veit Peter, Dipl.-Ing.

(57) **Abstract**

A method for presenting a runtime environment component service by a first computer system (1) to a second computer system (2) over a communication network (3), said method being performed by said first computer system (1), and comprising the steps of:
a) receiving a request for a runtime environment component service via said communication network (3), said request being generated in said second computer system (2) by a lightweight component (210) corresponding to said runtime environment component service,
b) accessing a runtime environment component (101, 102, 103, 104, 105, 106, 110) being able to provide said requested runtime environment component service,
c) executing said runtime environment component (101, 102, 103, 104, 105, 106, 110) on said first computer system (1) for producing a result according to said received request for a runtime environment component service,
d) transmitting, over said network (3), a response comprising said result to said second computer system (2).

## Description

The present invention relates to runtime environment component services, in particular to a method for presenting runtime environment component services by a first computer system to a second computer system over a communication network, and to a method for providing runtime environment component services, called by a software program being executed on a second computer system, by a first computer system over a communication network.

Today, many computer networks are arranged as client-server system. That means, a potentially large number of smaller computer systems, like laptops or handhold organizers, called clients, are, temporarily or permanently connected to a larger computer system, called server. The connection between the clients and the server may be effected, for example, via the Internet.

In client-server systems many software programs shall be available on the clients, despite of their limited storage or processing capacities. Therefore, software programs can be made available to clients from a server by means of browsers, which transfer software programs or parts thereof from a server to a client so that they can be executed locally of the client. This requires that the software program or a part thereof be stored and processed on the client. For this purpose, the client must be sufficiently powerful with respect to its storage capacity and its processing capability. These requirements may conflict with the aim of having smaller and smaller clients, including cellular telephones, which may not have enough storage capacity or processing capability for storing or processing, respectively, large software programs or large parts of software programs.

Frequently, a software program requested by a client for execution is transferred every time the software program shall be executed. The speed of this download depends on the available data transfer capacity of the network connecting the server and the client. Here, frequently the available bandwidth of the network connection is decisive. In many instances the described client-server systems would be undesirably slow in executing a software program, because the download takes too much time.

Therefore, software programs which are called frequently for execution on a client may be permanently, or at least for the same time, stored on the client. This leads, however, to the task of regularly, and may be even individually, updating a potentially large number of clients, if relevant software programs are amended or updated. Considerable administration efforts for client-server systems may be the consequence.

It is also known to include into a software program executed on a client procedures which are executed on a server. For example, certain more complicated calculations, the result of which may be needed on a client, may be carried out on a server connected with the client over a network. However, this requires that the program developer includes particular commands into the code of the software program to be executed on the client for calling the software program to be executed on the server, in the given example the calculation program. This is not only cumbersome, but may also lead to incompatibilities if the software program to be executed on the server is amended.

Computer Software programs and parts thereof, which are called during execution of other computer software programs or parts thereof, are herein referred to as runtime environment components. The functionality provided by these runtime environment components to calling software programs or parts thereof are herein referred to as runtime environment component services. In many cases, runtime environment components have a very large size. For example, office suites comprising drawing programs and wordprocessors as well as other tools may have sizes of 50 to 100 Megabyte which renders a distribution over the Internet difficult. The runtime environment components may be implemented in any suitable form. They may consist of compiled software program code to be executed or of script code in any programming language to be interpreted before execution by a compiler. Runtime environment components are typically stored and administrated on a server.

For the reasons mentioned above, it is a desire to make runtime environment component services, that means the functionalities provided by runtime environment components, which are, for example, stored on a server, available for use in software programs to be executed on, for example, clients without integrated them into these software programs and without distributing them together with these software programs to the place of execution, for example, the clients.

Further, the full functionality of the runtime environment components should be available for all kinds of clients whether they are powerful enough for storing or executing the runtime environment component or not. Further, the user of a client should not be charged with the problem whether a specific runtime environment component is available on his client or not.

It is, therefore, an object of the present invention to provide a method for presenting runtime environment component services and a method for providing runtime environment component services over a communication network which achieve these aims and avoid the drawback of the prior art. It is a further object to provide systems for performing said methods.

These objects are achieved by the methods and systems according to the independent claims. Particular embodiments thereof are defined in the dependent claims.

According to the invention, a method is provided for presenting runtime environment component services by a first computer system to a second computer system over a communication network, said method being performed by said first computer system, and comprising the steps of:
a) receiving a request for a runtime environment component service via said communication network, said request being generated by a lightweight component in said second computer system, wherein the lightweight component corresponds to the requested runtime environment component service,
b) accessing a runtime environment component being able to provide said requested runtime environment component, service,
c) executing said runtime environment component on said first computer system for producing a result according to said received request for a runtime environment component service,
d) transmitting, over said network, a response comprising said result to said second computer system.

The invention comprises also a method for providing runtime environment component services from a first computer system over a communication network to a second computer system, said method being executed on said second computer system and comprising the steps of:
a) generating a request for a runtime environment component service by means of a lightweight component of said second computer system, wherein the lightweight component corresponds to the requested runtime environment component service,
b) transmitting said request for said runtime environment component service to said first computer system over said communication network, and
c) receiving a response comprising a result according to said requested runtime environment component service, said result being produced by a runtime environment component executed on said first computer system and transmitted with said response by said first computer system over said network.

Thus, the runtime environment component services are presented by a first computer system to a second computer system over a communication network, whereby upon receiving a request for a runtime environment component service transmitted by said second computer system over said communication network, the first computer system executes a runtime environment component for producing a result according to said received request, and transmits - over said network - a response comprising said result to said second computer system.

In the context of the present invention a lightweight component is a software program which is able to request a runtime environment component service, wherein the lightweight component corresponds to this runtime environment component service, and wherein the lightweight component is tiny enough to be downloaded from the first computer system onto the second computer system via the network connecting the first with the second computer system within a time t significantly smaller than the time it would take to download the whole runtime environment component to which it corresponds.

The time t shall particularly, but not necessarily, be less than (8 N / C_{B}) + t₁, wherein N is the size of the runtime environment component in bytes, C_{B} is the average bandwidth of the network connection between the first and the second computer system, and t₁ is the time needed to initialize the runtime environment component providing the requested service in its respective local environment on the first computer system. In today's commonly available network connections between servers and clients the time t will typically be about ten seconds.

When using networks commonly used at present for the connection of clients and servers this time condition amounts to a scope of the lightweight component which is - measured in necessary storage space - less than ten or even less than five percent of the scope of the totality of the runtime environment components which can be requested by it, including any auxiliary software programs which these runtime environment components need to be executed in the first computer system.

Correspondance of the lightweight component with the runtime environment component service means, in this context, that the lightweight component must offer the second computer system access to the runtime environment component service made available by it. If a plurality of runtime environment component services is made available by the lightweight component, which will frequently be the case, the lightweight component corresponds to this plurality of runtime environment component services in the explained sense.

The inventive methods enable a second computer system to use results produced by a first computer system. The load of holding, maintaining and administrating these runtime environment components, as well as executing these runtime environment components, is burdened onto said first computer system. Nevertheless, said second computer system can profit from these runtime environment component services as if the relating runtime environment components were present locally on said second computer system. Therefore, additional functionality is provided even to those computer systems which are not powerful enough to store and / or execute the full range of runtime environment components, as for example notebooks, handheld computers, organizers and mobile telephones. Since said first computer system and said second computer system exchange requests for services and responses to said requests, rather than exchanging programming code to perform the services, the amount of data transfer between both computer systems is considerably reduced. This shortens communication time (on-line time) and leads to faster running software programs on the second computer system.

The inventive methods are particularly interesting for use with a client/server environment. In that case, the first computer system takes over the role of a server, whereas the second computer system is one of the clients. The network may be a local network or a wide-area network, as for example the Internet.

As an example, said runtime environment component services may relate to graphic functions, word processing functions, document editing functions, mathematical functions, table calculation functions, or printing functions. Said runtime environment components may be, for example, of the form of application programming interfaces or runtime components.

The runtime environment component services offered by the first computer system are requested, according to the present invention, by means of a request generated by a lightweight component on the second computer system. This lightweight component may issue this request in response to a call of a software program being executed on the second computer system. However, the lightweight component may also be or have a user interface, so that no additional software programs need to be executed on the second computer system.

The runtime environment components as well as possible software programs calling for their services may comprise compiled program code to be executed or script code to be interpreted.

As a general advantage of the invention, all the characteristics of the runtime environment components residing on said first computer system, for example a program interface and a runtime environment, can be made fully available for use by said second computer system. If new components or releases of components are added to said first computer system, these can be made immediately available to the second computer system without any significant modifications or additions required on said second computer system. This central administration of runtime environment components reduces the load of administration on said second computer system and on a client/server system in general.

Said request and / or said response sent over said communication network may be compliant with a predetermined communication protocol, in particular with the Internet protocol.

In particular, if the communication network is an open wide-area network, said request and / or said response may be transmitted over secure channels. For example, encryption / decryption technologies may be applied for the communication between said computer systems.

Said request and / or said response may comprise identification data of said first computer system, identification data of said second computer system, identification data of said runtime environment component service, and input data to said runtime environment component service.

It is to be understood that said first computer system may present said runtime environment component services to an arbitrary number of second computer systems independently from each other. On the other hand, a second computer system may transmit its requests selectively to different first computer systems. The communication network may be of any type suitable for communication between computer systems, including wired and partially or totally wireless. The computer systems may be of any type of processing environments, and of any size. They may be embedded into other systems.

The invention can be implemented by a computer system comprising computer program code or application code. Computer program code or application code may be embodied in any form of a computer program product. A computer program product comprises a medium configured to store or transport computer-readable code, or in which computer-readable code may be embedded. Some examples of computer program products are CD-ROM disks, ROM cards, magnetic disks or tapes, service on a network, and carrier waves. The computer program product may also comprise signals which do not use carrier waves, such as digital signals transmitted over a network. The computer program product may then be implemented as any transmission link, such as a connection to the Internet, or any LAN, WAN, telephone network, or the like.

Further, the invention comprises runtime environment components for use with a method according to the invention. In particular, the invention also comprises a data base comprising runtime environment components relating to said services according to any of the inventive methods.

The invention and particular embodiments thereof are exemplary described in connection with the drawings, wherein
Fig. 1 gives a general overview of an implementation of the invention,
Fig. 2 illustrates the processing of a request by a remote server framework,
Fig. 3 illustrates an implementation of a lightweight component,
Fig. 4 illustrates the transparent access via an object component model,
Fig. 5 illustrates an implementation of a visual lightweight component,
Fig. 6 illustrates remotely drawing,
Fig. 7 illustrates accessing an API,
Fig. 8 illustrates the creation of a Java bean lightweight component,
Fig. 9 illustrates relating a StarOfficeBean frame window,
Fig. 10 gives a flow chart for an example using the present invention,
Fig. 11 illustrates a client's view of a non-visual lightweight component, and
Fig. 12 illustrates a client's view of a visual lightweight component.

The inventive concept may be implemented in a software system for providing the functionality (i.e. the services) of runtime environment components from a server computer system via a network to one or several client computer systems.

The software system consists of two parts, one of them being executed on a client, the other residing and being executed on the server. The part on the server platform makes up the runtime environment comprising a plurality of runtime environment components which are able to provide services. Furthermore, the part on the server provides the necessary communication tools in order to communicate with the client. The other part, being executed on the client, performs mainly the communication between the client requesting a runtime environment component service and the part being executed on the server which renders the runtime environment component service requested. The server's part of the software system is by far larger in size than the client's part thereof. This latter part is referred to as the 'lightweight component'. A typical size of the software system's part on the server may be 50 to 100 Megabyte (e.g.: an office software package), whereas the lightweight component on the client may have a typical size of 400 Kilobyte, and may utilize only little system resources (CPU power, memory).

The small size of the lightweight component makes it attractive to download it within very short time from the server to a client when the corresponding runtime environment component service is actually needed. Then, via the lightweight component, the client has access to all the services presented by the runtime environment components hosted on the server.

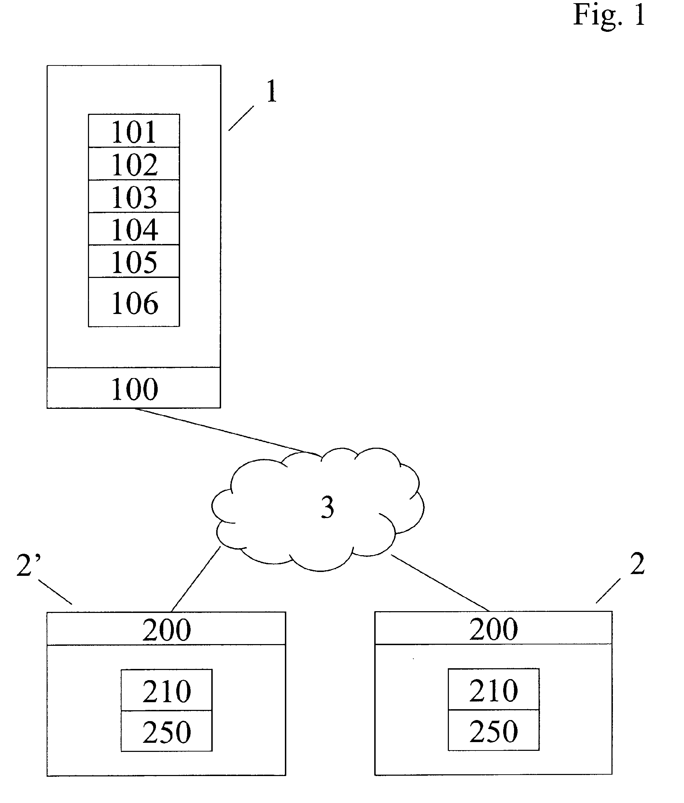

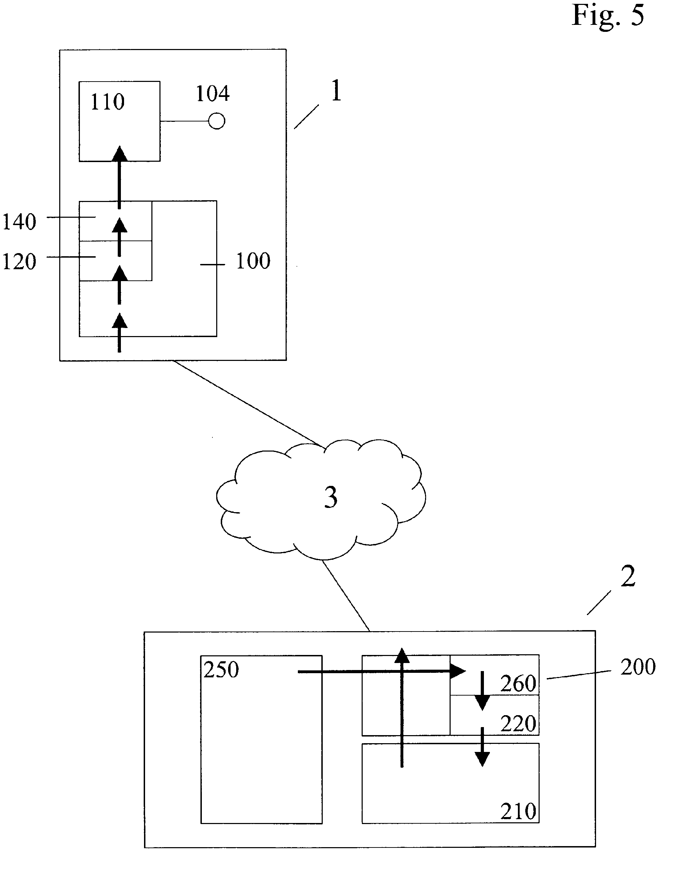

The lightweight component provides an application programming interface (API) for any application program the implementation of which on the client is allowed by an implementation framework on the server. Two types of lightweight components are explained in the following, one being a standard component (referring to Figures 1 to 4), the other being a component rendering visual functionality (referring in particular to Figures 5 to 9).

Reference is made to Fig. 1, which illustrates the communication between the server 1 and an arbitrary number of clients 2, 2' which are connected via communication network 3. The server 1 presents the runtime environment component services to the clients 2, 2'. Server 1 hosts components 101, 102, 103, 104, 105, 106 of the runtime environment as well as a component 100 for communication with the clients 2, 2' via a network 3. The network 3 is here assumed to be the Internet, although any other network may be used as well. Each client 2, 2' is adapted to execute (at least) one software program 250.

On each of the clients 2, 2' a lightweight component 210 is implemented, which provides services of the runtime environment components 101, 102, 103, 104, 105, 106 hosted on server 1 to a software program 250 running on the clients 2, 2'. The communication with server 1 is performed by the communication component 200 via the network 3. It is to be noted that the lightweight component 210 may initially not be available on the clients 2, 2'. In this case, the lightweight component 210 may be downloaded on the clients 2, 2', for example, from the server 1 upon the first request for runtime environment component services which are accessible by means of the lightweight component 210.

It is assumed that on the clients 2, 2' a software program 250 (e.g.: an Internet browser) is executed. Whenever the software program 250 calls for a runtime environment component, for example an API 101 for providing a mathematical function, the lightweight component 210 receives this call. The lightweight component 210 then transforms this call into a request and transmits it via the communication component 200, the network 3 and the communication component 100 to the server 1, where the API component 101 called for is residing.

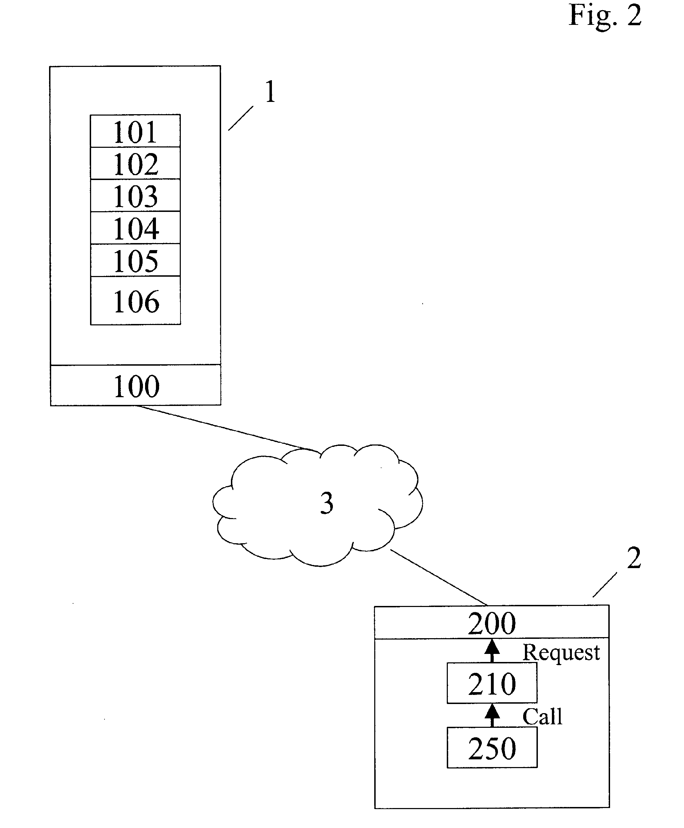

Fig. 2 to 4 now illustrate the processing for presenting / providing the runtime environment component services in more detail.

Referring to Fig. 2, the lightweight component 210 receives a call for an API component 101 from the software program 250 running on the client 2. With the call, data (e.g. arguments) necessary for performing the requested runtime environment component service of API component 101 is received. The lightweight component 210 transforms the received call into a request to be transmitted over the network 3 to the server 1 which actually hosts the runtime environment, including the now requested API component 101.

The transmission of the request over the network 3 is performed according to a predetermined transmission protocol. The transmitted request contains the data (e.g. arguments) from the calling software program 250 for being processed by the API component 101. If the network 3 is publicly accessible, the transmission may be encrypted according to known technologies. Further, digital signatures can be used to provide certification of the request mechanism being established on the client for this runtime environment component services system.

The request is received by the server 1 on which the appropriate communication component 100 is executed. The communication component 100 transforms and decrypts (if necessary) the transmitted request, performs digital signature processing, and accesses the requested API component 101 implementing the desired mathematical function. This API component 101 is executed on the server 1, whereby the data (e.g. arguments) received with the request are processed. The result thereof is encrypted (if necessary) by the communication component 100 and transmitted from the server 1 back to the client 2.

The lightweight component 210 on the client receives and re-transforms the result (and decrypts it, if necessary) and provides the result to the software program 250 having called for the service of the API component 101.

Thus, the lightweight component 210 on the client 2 delegates calls to the API component 101, which may be part of an implementation framework on the server 1. The lightweight component 210 operates hidden to the calling software program of the client 2. The called runtime environment component 101 is executed on the server 1. However, the calling software program 250 on the client 2 does not notice whether the execution of the runtime environment component 101 is local, i.e. on the client 2, or remote, i.e. on the server 1. The calling software program 250 does not need to be modified for the use with the lightweight component 210, since, the call for a runtime environment component is 'intercepted' and transformed into a suitable request to the server 1 by the lightweight component 210, according to the invention.

On the other hand, local services available on the client 2, including devices like printers and local storage, can also be utilized by the runtime environment components on the server 1, in a transparent manner. Transformation of the call of the software program 250 to the lightweight component 210 and re-transformation of the result received from the server 1 are performed "on the fly".

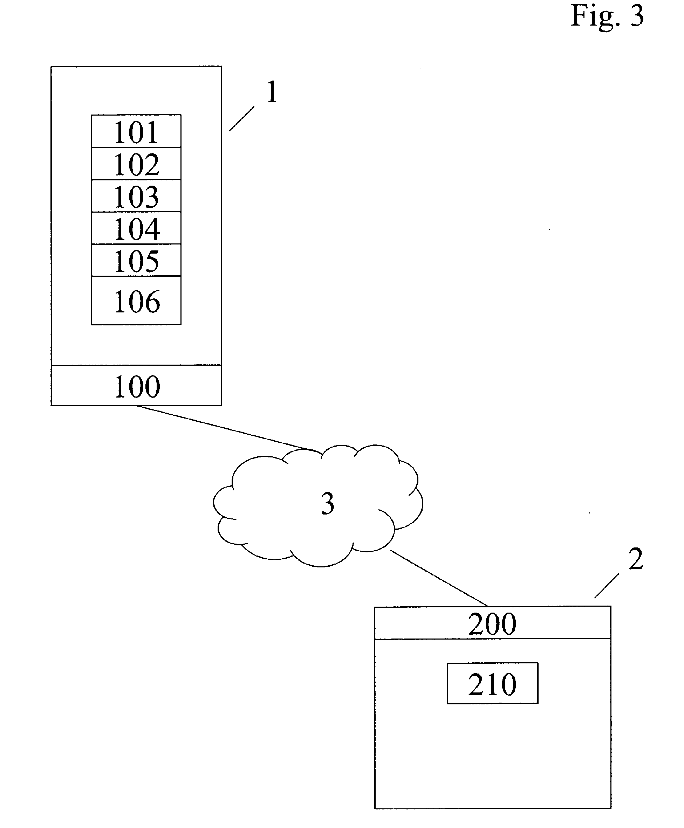

Fig. 3 illustrates the implementation of the lightweight component 210. As mentioned above, the component 210, which is necessary for transforming the call can be kept relatively small. It can have a small installation size and low usage of resources compared to the runtime environment components on the server 1.

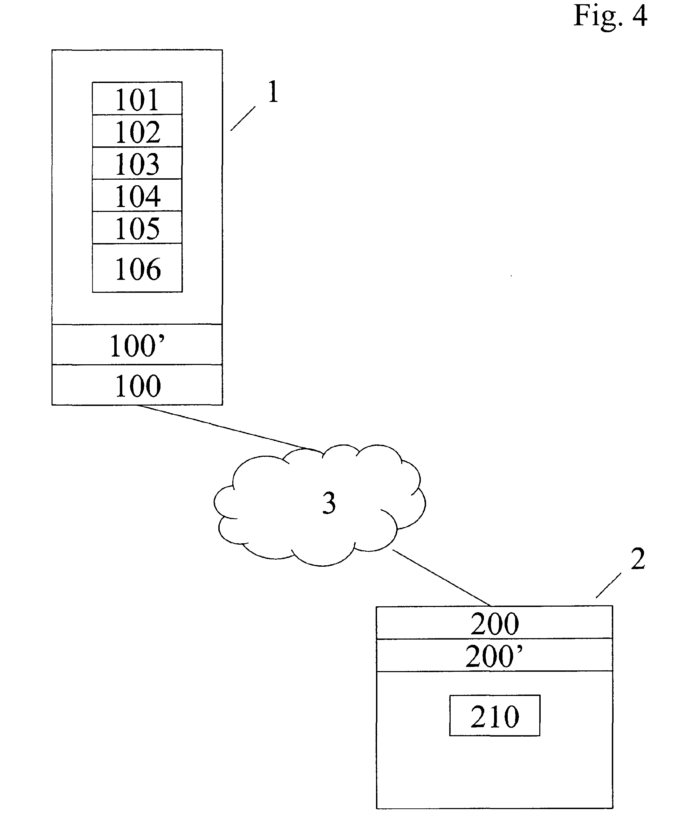

Fig. 4 exemplary illustrates the transparent access of a runtime environment component via an object component model. The object component model handles calls by marshaling requests for runtime environment component services through stub objects 200' on the client 2 and transmitting it over the network 3 to the server 1. There, the requests are unmarshaled through proxy objects 100'.

The stub objects 200' and the proxy objects 100' are generated dynamically, for example, by the communication component 200 and by the communication component 100, respectively. Therefore, a caller does not have to implement the stub objects 200' and the proxy objects 100'.

Marshalling of a request is, in the present context, understood as the process of embedding a request for a runtime environment component service in a bit stream for transmission over a network. The unmarshalling is the inverse process of the marshalling.

The transmission concept through stub and proxy objects is described in more detail in the Annex.

The stub / proxy object component model used here implies that a lightweight component is able to access any arbitrary runtime environment component 101, 102, 103, 104, 105, 106 available on the server 1, as if it resided locally on the client 2.

Referring to Figures 5 to 7, a further embodiment of a lightweight component 210 is explained. The communication between the server 1 and the client 2 is performed via the network 3 by the respective communication components 100 on the server 1, and 200 on the client 2. The same encryption / decryption mechanisms as indicated above may be applied. In addition to the basic generic lightweight component 210 as described in connection with Figures 1 to 4, the lightweight component 210 may include the ability to perform graphic interaction and to manage user interaction. In the following, such a component is referred to as a visual lightweight component. Such a graphic interaction may comprise drawing visual contents on the client 2, for example, on a screen of a client laptop. Again, as described above, the main part of the processing is burdened on the runtime environment component residing and running on the server 1.

The protocol which may be used for transmitting graphical requests between the client 2 and the server 1 is the Remote Visualization Process protocol (RVP). RVP is a high level definition of a graphic device defined as a set of interfaces. RVP is based completely on a component infrastructure. This gives RVP the ability to map functionality which a client system is unable to support, to a service component on the server side emulating this functionality.

The graphical environment may communicate with the lightweight component 210 through the Java Abstract Window Toolkit layer (AWT). AWT stands for the definition of the graphic and user interface layer for the Java language. It is defined as a set of Java classes and interfaces which are mapped to the concrete implementation on different platforms. AWT is part of the standard Java environment.

The service component on the server side uses a VCL implementation as drawing engine. VCL (Visual Class Library) is a C++ class library . It provides similar to the AWT a set of classes and interfaces to build graphical applications on different platforms. For every platform there is a concrete implementation of VCL. For the lightweight visual components, VCL provides a special implementation, which transmits all graphical requests for drawing over the network to a client side, where these requests are intercepted and mapped to a platform dependent graphic layer, which is here AWT.

Again, the implementation framework on the server handles drawing and user interaction transparently to the component.

Fig. 5 illustrates RVP event processing. The visual lightweight component 210 is embedded in a graphical environment, the graphical environment comprising a display software program 250 with a graphical user interface (GUI). The graphical user interface is referred to as a panel. An example of an implementation is a Java bean which is embedded in an HTML page and rendered by a browser. This Java bean represents a view (in a window) of an office application component (e.g. StarOffice Writer) or another visual office component.

An event from the graphical environment is passed to the AWT 260, and then interpreted by the RVP protocol layer, which performs communication between the client visual lightweight component 210 and the remote office runtime environment component implementation 110 on the server platform 1. From RVP 220 the event is marshaled by communication component 200 and transmitted to the server 1. There, it is unmarshaled and passed to the RVP 120 by communication component 100, and dispatched by the VCL layer 140.

The runtime environment component 110 receives the event. After the event is dispatched, the component 110 is able to react to the event.

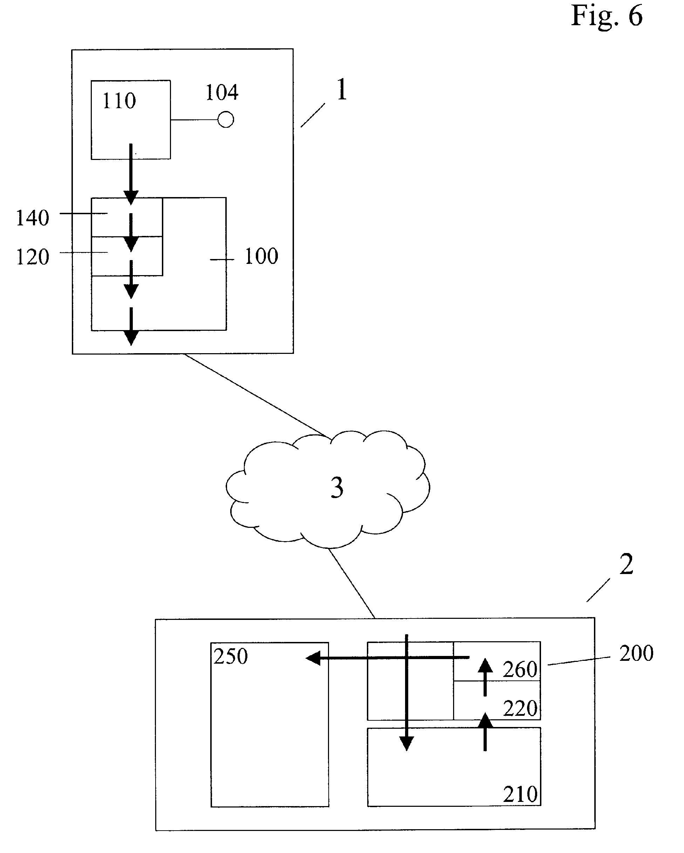

Fig. 6 illustrates the transmission of the response of the component 110 on the server 1 back to the requesting client 2. The requested service is here a drawing functionality which is implemented by RVP drawing. The office component (e.g. the StarOffice Writer) 110 is able to draw on a panel within software program 250 of the client 2 using the same mechanism as described above. The component 110 uses the VCL 140 as a drawing engine. The operations are transmitted through VCL 140, RVP 120 and communication component 100 on the server 1 to the client 2. Client 2 receives the operations and passes them to the AWT 260 which is able to draw on the panel of the client 2 directly.

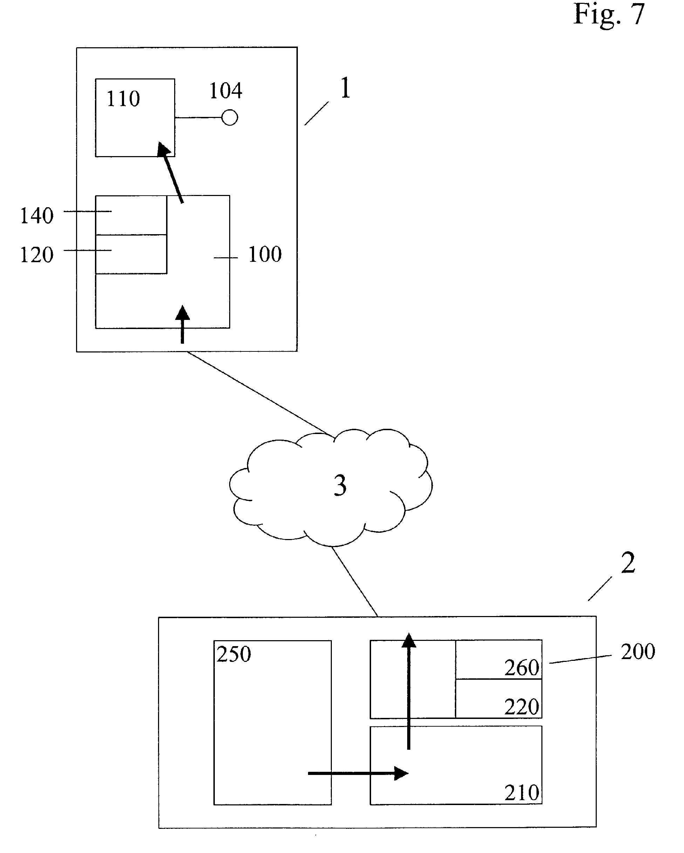

Fig. 7 illustrates accessing an API as a runtime environment component on the server 1 by the client 2. The visual lightweight component 210 is, in the example described in Fig. 5 and Fig. 6, still able to access transparently the full functionality of an API 104 provided by the office component 110. The request of the lightweight component 210 for API 104 is handed over to the office component 110 through the communication component 200 on the client 2 and the communication component 100 of the server 1. Herein, the request for the API 104 generated by the lightweight component 210 may bypass RVP 220 and AWT 260 on the client 2 and likewise RVP 120 and VCL 140 on the server 1, if not drawing services are requested. The latter would be the case, for example, if API 104 would provide calculation services. In order to have the request bypass the mentioned components the lightweight component 210 must decide that these components shall be bypassed. This decision can be made by the lightweight component 210 based on the call of the API 104 received from the software program 250 and the information that the API 104 does not provide drawing services. This information will regularly be present in the lightweight component 210, since it has information about all runtime environment components being available on the server 1 anyway, since it has to request their services and receive their responses. However, if necessary the office component 110 may also react to the request for API 104 by drawing via RVP 220 directly on the panel of client 2.

An exemplary scenario for the latter might be the following: a user on client 2 editing a text document displayed in his browser whishes to change the font size to 10 points throughout the whole document. For this purpose, the client 2 uses the API 104 to change all fonts throughout the whole document to a size of 10 points. In this case, the office component 110 running on the server 1 re-calculates the display of the document, renders the document remotely, and draws the document on the client 2 through the RVP 120 and RVP 220.

However, if the user on client 2 changes the font size only for newly input text lines, the currently displayed document does not change, thus there is no need to re-draw the whole document on the client 2. The event of changing the font size is passed via RVP 120 to the office component 104 and forces new rendering of the document on the server 1. Since no re-drawing of the document on the client 2 is needed, the lightweight component 210 does not have to take any further action.

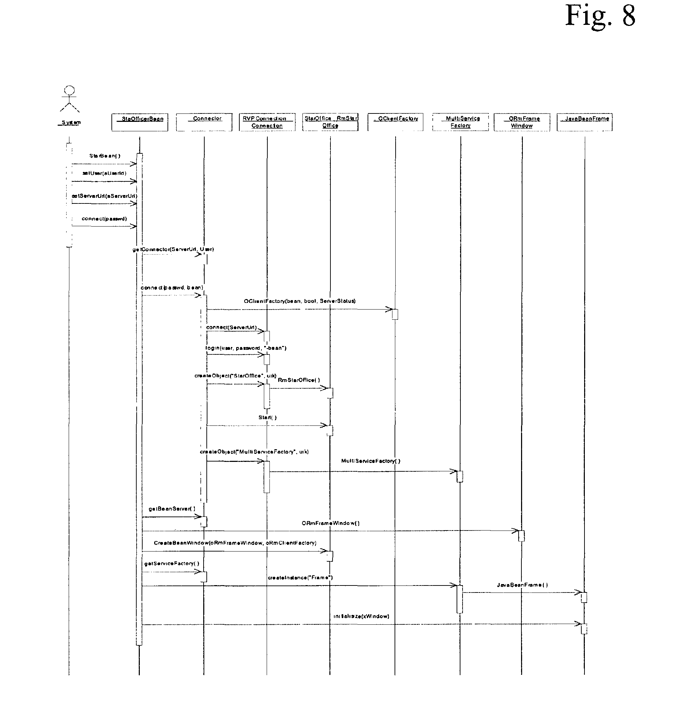

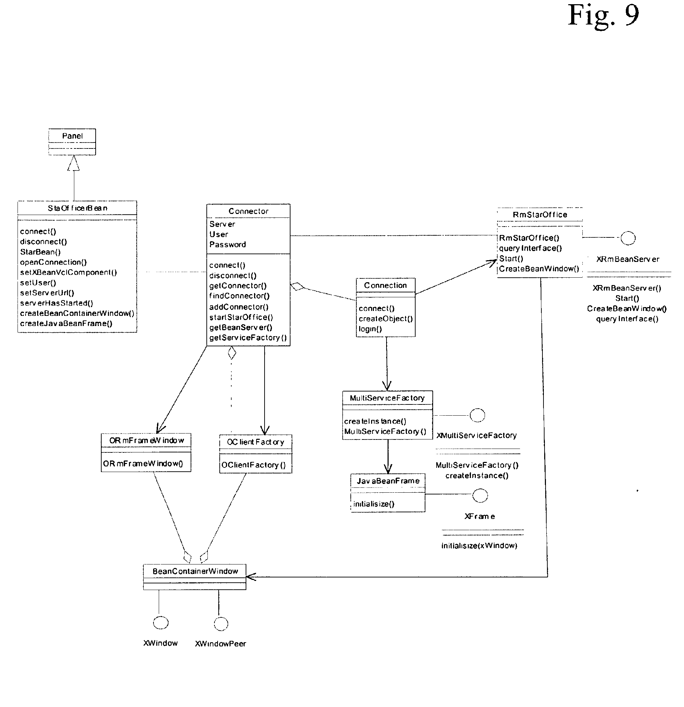

The participating components to create a Java bean lightweight component in the frame of the office application program package StarOffice used as a runtime environment component are shown in Fig. 8. An accompanying sequence diagram is supplied in Fig. 9. The figures are reduced to show only needed relations and methods to illustrate this specific process. A *StarOfficeBean* represents a common java bean which is derived from a java panel. It resides on the client as the single instance *Connector,* which is responsible for maintaining connections to the remote machine. All client beans share one connection per user and server. The *OClientFactory* created by the *Connector* is also located at the client 2. This enables the remote Office Component to create elements which are specific to the client 2. Examples for these items range from a simple frame window to a printer device handled locally. Next the *Connector* establishes a connection to the remote machine and starts the login process. If succeeded the server 1 starts a StarOffice session remotely and the *Connector* confirms the session with *Start().* The task of the remote *MultiServiceFactory* created by the *RVP Connection* instance is to create needed instances on the remote machine. Then a local *ORmFrameWindow* is created and passed together with a reference of the *OClientFactory* to the remote StarOffice instance to be able for local dispatching and drawing. By calling *initialize*() on the remotely created *JavaBeanFrame* all actions are done and the process of creating a StarOfficeBean is completed.

Unlike components like CORBA objects, lightweight components 210 do not have any additional code for accessing the implementing object. Also the size of a lightweight component 210 does not increase with the number of accessed runtime environment components of the implementation server framework. This introduces the ability to offer components which expose only services designed for a special purpose and hide complexity of the implementation framework.

By applying the invention, it is possible to include for example full word processing functionality provided by the server 1 into any other application program 250 running on the client computer 2.

Special purposes may be applications designed for being executed on particular clients like handheld computers or mobile telephones, where storage and processing capabilities are particularly limited. Nevertheless, the whole functionality of the framework is still accessible.

Furthermore, when adding new runtime environment components to the server 1, no modification on the client side is necessary. Through the concept of lightweight components, a new runtime environment component on the server is immediately callable by the client. The components are based on a generic lightweight component which is able to communicate with the implementation framework via the object component model.

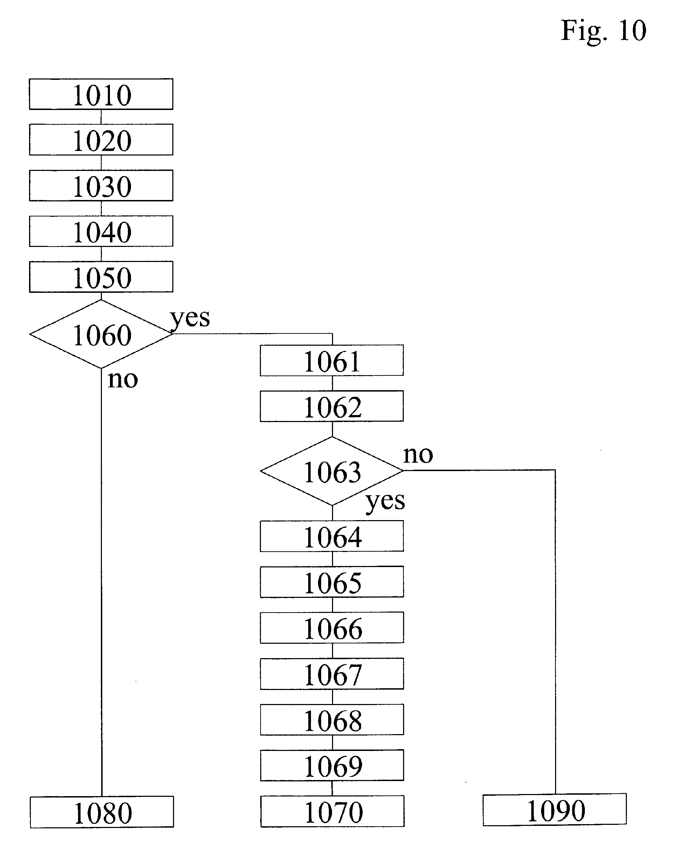

Fig. 10 refers to an example for using the present invention. In this example a setup is used as described in Fig. 5 to 7. Therefore, reference numerals also relate to components which are presented and described in more detail in connection with Fig. 5 to 7. However, the method according to Fig. 10 does not correspond to the methods described along Fig. 5 to 7.

In this example, a user utilizes his computer system as a client 2. This client 2 includes a screen on which the user can edit and process a text document. The client 2 includes text processing software 250 with a limited scope of functionality and a lightweight component 210 which corresponds to comprehensive services offered by an office suite software package 110 located as runtime environment components on a server 1 to which the client 2 is connected via a network 3.

For the purposes of this example the user edits a text document on the screen of the client 2 and changes the font size of the text. In order to do this he inputs his commands via a suitable input device of the client 2, for example, a keyboard. In step 1010 the text processing software 250 on the client 2 requests the service "font change" from the lightweight component 210. The lightweight component 210 receives this request in step 1020. In step 1030 the lightweight component 210 marshals the request and transmits it via the communication component 200 in client 2 to the communication component 100 of the server 1 via the network 3.

The server 1 unmarshals the request and calls the runtime environment component 110 in step 1040. In the next step 1050 the component 110 starts processing the "font change" request. It will determine in step 1060 if a re-drawing of the text document on the screen of the client 2 is necessary due to the requested font change.

If not, the service component 110 will immediately produce a result to the request in step 1080. A re-drawing may not be necessary, if the user wants the font change to be effective exclusively for further input into the text document. In this case the result to be provided by component 110 could be a return code to the software program 250 which tells the software program 250 that further input into the text document will be processed with the new font on the screen of the client 2.

If yes, for example, if the font shall be changed for the whole text document, the component 110 renders a new graphical presentation of the text document in step 1061. Then, in step 1062, the output operations for the realization of the graphical presentation are given to the VCL 140 by the component 110. In step 1063 it will be decided by VCL 140 whether the output operations have to be carried out in a visible area, e.g. on a screen.

If this is not the case, for example, if the text document with the font changed throughout its entire scope would only be stored as a data file but not shown on the screen of the client 2, the result would be created in step 1090 by VCL 140. This result would be the text document in the new form. No display on the screen of the client 2 would be envisaged in this case.

If this is the case, for example, if the text document shall be displayed on the screen of the client 2, the "change font" request realized by VCL 140 is transmitted to RVP 120 in step 1064. This realized request is then, in step 1065, marshaled and sent via communication component 100 of server 1, via the network 3 and via the communication component 200 of the client 2 to the lightweight component 210 on the client 2. In step 1066 the lightweight component 210 unmarshals the realized request. In step 1067 the request is translated into an AWT request. This AWT request is transmitted in step 1068 from the lightweight component 210 via the RVP 220 to the AWT 260. In step 1069 the AWT 260 executes the transmitted AWT request. Finally, in step 1070 the result will be transmitted to the software program 250 so that the text document will be drawn on the screen of the client 2 with the new font size.

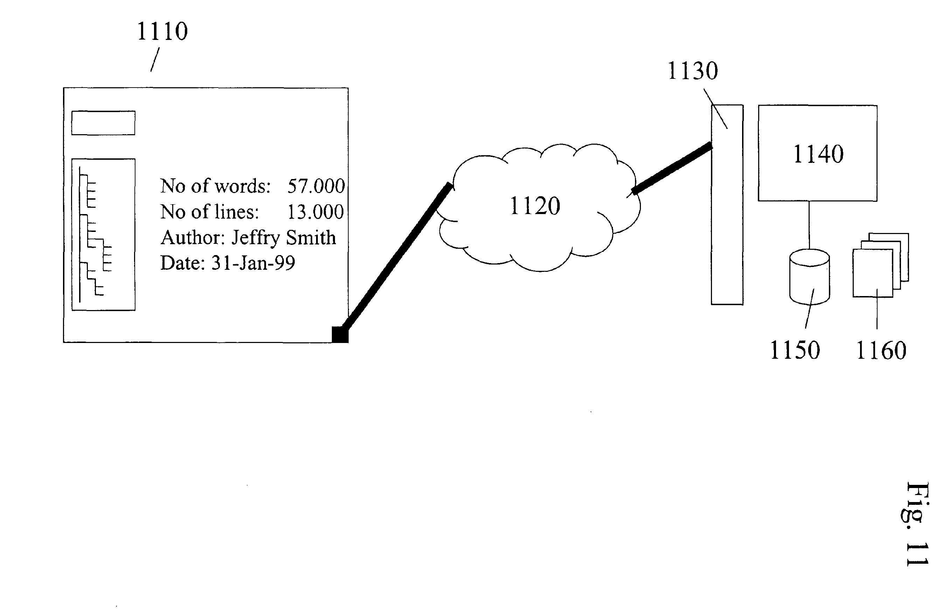

Fig. 11 illustrates a non-visual lightweight component. Non-visual means that the user of the client on which the lightweight component is located does not receive any hints as to its presence. He does not see it and he can also not interact with it directly.

In Fig. 11 a client 1110 is shown with a screen showing, on the left, a tree-like representation of data files below a window, and, on the right, information given about a certain text document which was selected by the user by means of the tree-like representation of data files. The client 1110 is connected via network 1120 to a server 1130 which has access to a text processing software program as runtime environment component 1140. This component 1140 has in turn access to a storage medium 1150 and to a library 1160.

If a user of the client 1110 wants to obtain information, for example, number of words and lines, author and date of this version, about a text document chosen from the tree-like representation of data files, he enters his request via an input device of the client 1110, for example, a keyboard of the client 1110. Then, the non-visual lightweight component on the client 1110 will contact, as described above, via the network 1120 the server 1130 and ask for the services providing the information requested by the user from the runtime environment component 1140. The result provided by the component 1140 will then be re-transmitted to the client 1110 so that the desired information - number of words and lines; author and date of this version of the selected text document - can be displayed on the screen of the client 1110. The lightweight component remains non-visual to the user of the client 1110.

Fig. 12 in contrast shows an example of a visual lightweight component, that means a lightweight component with which the user may interact, but which will at least be recognized by the user in some situations.

A client 1210 includes a visual lightweight component. The client 1210 is connected via network 1220 with the server 1230, which in turn has access to the runtime environment component 1240 connected to storage medium 1250 and data base 1260.

In this example, a user of the client 1210 edits a text document on the screen of the client 1210, as shown in Fig. 12 on the right, besides the above described window and tree-like representation of data files. The shown screen representation of the text document shows in the right middle position a small window with which the user may manipulate the displayed text document. This window represents the lightweight component. Here, the user may directly interact, via the window presentation, with the lightweight component, which is therefore referred to as a visual lightweight component.

If the lightweight component is activated by a user interaction it may contact, as described above, the server 1230 and thereby the runtime environment 1240, which may provide a service requested by the user by his interaction from the client 1210.

Comparing a non-visual and a visual lightweight component as above described, it may be advantageous to use a non-visual lightweight component for processing requests which do not require particular operations for their fulfillment, in particular, no drawing operations on a screen of a client. In this case, the non-visual lightweight component may provide the response to the request more quickly than a visual lightweight component, since, for example, drawing operations are not processed at all; they are not only ignored by the client after having been processed with great efforts.

It is understood that the present invention is not limited to the embodiments shown and described herein.

### Annex

The present invention relates to a method for enabling a first software program using a first binary specification to employ a limited functionality of a second software program using a second binary specification.

Many software programs, which are created in different programming languages, have to communicate with each other. For example, a first software program created in a first programming language is able to provide tables. It calls another software program created in a second programming language which is able to calculate figures which are needed in the table to be produced by the first program. The calculation program cannot be called by the table program, since these two programs use different binary specifications for the communication because of their different programming languages. In the context of the present invention the different binary specification can be caused by different programming languages as well as by different compilers for the same programming language, since the communication problems caused by a different programming language and by different compilers for the same programming language are comparable, if not identical.

The prior art solution to this problem is to provide transformer modules for each required transformation route, for example from a certain first binary specification to a certain second binary specification. Since in modern computer applications many different software programs may be called by a certain software program, the computer system requires a voluminous library of transformer modules. This extensive library needs significant storage space and regular maintenance, since for every new binary specification which shall be accessible a full new set of transformer modules must be provided, in addition to the existing transformer modules. However, most of these transformer modules are not used frequently, so that their storage is not efficient.

Furthermore, these prior art transformer modules extend to the full functionality of the software program to be translated from one binary specification to another. Due to the regularly wide functionality of software programs known transformer modules are rather voluminous and require, when they are activated, a significant amount of working memory and processor time from the computer system on which they are carried out. Furthermore, the complete translation of a software program is burdensome and time consuming, although it is in most cases unnecessary for the specific task to be accomplished.

Therefore, it is an object of the present invention to provide an efficient method to enable a first software program to employ certain functionalities of a second software program, wherein the first and the second software program use different binary specifications.

This object is solved by the present invention by providing a method for enabling a first software program using a first binary specification to employ a limited functionality of a second software program using a second binary specification, including the following steps:
a) initiating the creation of a stub, which is able to transform commands relating to the limited functionality of the second program between the second binary specification and an intermediate binary specification, using a second bridge, wherein the second bridge provides a mapping of the second binary specification and the intermediate binary specification,
b) initiating the creation of a proxy, which is able to transform commands relating to the limited functionality of the second program between the first binary specification and the intermediate binary specification, using a first bridge, wherein the first bridge provides a mapping of the first binary specification and the intermediate binary specification, and
c) initiating the arrangement of the proxy and the stub relatively to the first program and the second program in a manner allowing the first program to employ the limited functionality of the second program.

According to the present invention software programs are compiled executable programs. Software programs are initially written in a programming language, for example, C++ or Java or an object model like Corba. They are compiled with compilers corresponding to the programming language. However, for each programming language several compilers may be available. The binary specification in which a software program is able to communicate with other software programs depends on both, the programming language and the compiler. This communication language of a software program is the language referred herein as the binary specification used by a software program, for example, the first, the second and the intermediate binary specification.

The intermediate binary specification serves as the binary specification into and from which the communication between the first and the second software program will be translated. This intermediate binary specification may be, for example, an existing binary specification like the binary specification of a specific compiler, but it is also possible that this intermediate binary specification is a suitable newly created binary specification, for example, a binary specification which facilitates translation into and from it.

In the scope of the present invention the two transformer modules, called proxy and stub, are created on demand, that means if and when they are needed. This creation on demand will be initiated directly that means by the first software program or by means of an initiating function. This creation on demand is considered to be dynamic, so that the commands of the first software program may be dispatched dynamically. The two transformer modules are at least able to transform commands corresponding to a limited functionality of the second software program. Since the first software program employs in most cases only a part of the functionality of the second software program, the two transformer modules need to transform only commands which correspond to this limited functionality. In the scope of the present invention commands are understood to be any kind of message initiating any kind of activity of a software program and which may be transmitted between the two software programs.

In the scope of the present invention it is possible to insert further modules between these two transformer modules. These modules may be able to intercept the commands. This interception may be used, for example, to add security or accounting functionality. It is also possible to use these two transformer modules to synchronize the commands or to use them for debugging.

For the creation of the proxy and the stub mappings between the basic commands, on which all other commands are based, of the two pairs of participating binary specifications are used. These pairs are the first binary specification and the intermediate binary specification and the second binary specification and the intermediate binary specification. These mappings will be provided by the bridges and may be, for example, stored in a data base. However, the bridges may also already be a part of the second software program. In case these mappings cover the complete functionality of the relevant binary specifications - which is frequently the case - only some parts of the mapping may be considered during the creation of the proxy and the stub, since they relate to the above mentioned limited functionality only.

After their creation the proxy and the stub are arranged in a manner which enables the first software program to communicate with the second software program. That means a path of communication must be arranged from the first software program to the proxy, from the proxy to the stub, and finally from the stub to the second software program. This route must regularly be accessible from both sides, that means from the side of the first software program as well as from the side of the second software program.

In order to generate the stub the second binary specification used by the second software program must be known. For this purpose, the first software program may start the second software program. This may be done by the first program by means of a loader function which loads the second software program. Loader functions are well known in the prior art. A loader function is able to initiate a software program using a certain binary specification on demand of another software program using a different binary specification. The loader function may directly initiate the creation of the required stub or it may initiate that the second software program or an auxiliary program communicating with the second software program creates the stub. This is possible, if the loader function carries or supplies by any means the information about the limited functionality of the second software program requested by the first software program.

The creation of the stub may be carried out by the second software program or by any sub-program of the second software program. It is possible that this sub-program exists already in the second software program. However, this sub-program may as well be procured or generated by the second software program in response to a request of the first software.

After the creation of the stub, the initiated second software program or its sub-program creating the stub may inform the first software program that the stub has been created. This may initiate the creation of the proxy by the first software program or any suitable sub-program, as it was described above for the creation of the stub.

The proxy is created by the first software program or a sub-program, a function thereof. The sub-program of the first software program must consider the bridge for the transformation of the first binary specification into the intermediate binary specification and reverse and the requested limited functionality of the second software program. The information about the requested limited functionality is generally available in the first software program, because the first software program requests this limited functionality from the second software program.

In order to enable the communication between the first software program and the second software program the stub and the proxy may transform any commands or other messages between these two software programs, as far as the proxy and the stub support this functionality. This requires the above described arrangement of the proxy and the stub relatively to the first and the second software program.

The present invention also provides a method for employing a limited functionality of a second software program using a second binary specification by a first software program using a first binary specification, including the following steps:
a) initializing the limited functionality of the second software program by the first software program,
b) creating a stub, which is able to transform commands relating to the limited functionality of the second software program between the second binary specification and an intermediate binary specification, using a second bridge, wherein the second bridge provides a mapping of the second binary specification and the intermediate binary specification,
c) creating a proxy, which is able to transform commands relating to the limited functionality of the second software program between the first binary specification and the intermediate binary specification, using a first bridge, wherein the first bridge provides a mapping of the first binary specification and the intermediate binary specification,
d) transmitting an command relating to the limited functionality from the first software program to the proxy,
e) transforming the command from the first binary specification into the intermediate binary specification by the proxy,
f) transmitting the command transformed by the proxy from the proxy to the stub,
g) transforming the transmitted command from the intermediate binary specification into the second binary specification by the stub,
h) transmitting the command transformed by the stub from the stub to the second software program,
i) carrying out the command in the second software program and generating a response for the first software program,
j) transmitting the response, being in the second binary specification, from the second software program to the stub,
k) transforming the response from the second binary specification into the intermediate binary specification by the stub,
l) transmitting the response transformed by the stub from the stub to the proxy,
m) transforming the response from the intermediate binary specification into the first binary specification by the proxy,
n) transmitting the response transformed by the proxy from the proxy to the first software program.

The transmissions between the proxy and the stub and the software programs and the proxy or the stub, respectively, may be effected by any suitable means. It is relevant, however, that these elements are arranged so as to allow the communication of the two software programs.

Furthermore, a method for using a stub, which is able to transform commands relating to a limited functionality of a second software program between a second binary specification and an intermediate binary specification, using a second bridge, wherein the second bridge provides a mapping of the second binary specification and the intermediate binary specification, is provided for enabling a first software program using a first binary specification to employ the limited functionality of the second software program by further using a proxy, which is able to transform commands relating to the limited functionality of the second software program between the first binary specification and the intermediate binary specification, using a first bridge, wherein the first bridge provides a mapping of the first binary specification and the intermediate binary specification, wherein the proxy and the stub are arranged relatively to the first software program and the second software program in a manner allowing the first software program to employ the limited functionality of the second software program.

Also provided is a method for using a proxy, which is able to transform commands relating to the limited functionality of the second software program between the first binary specification and the intermediate binary specification, using a first bridge, wherein the first bridge provides a mapping of the first binary specification and the intermediate binary specification, for enabling a first software program using a first binary specification to employ the limited functionality of the second software program by further using a stub, which is able to transform commands relating to a limited functionality of a second software program between a second binary specification and an intermediate binary specification, using a second bridge, wherein the second bridge provides a mapping of the second binary specification and the intermediate binary specification, wherein the proxy and the stub are arranged relatively to the first software program and the second software program in a manner allowing the first software program to employ the limited functionality of the second software program.

In the scope of the present invention there is also provided a computer program, also referred to as a computer program product, for carrying out the method of the present invention. A computer program product comprises a medium configured to store or transport computer readable code, or in which computer readable code may be embedded. Some examples of computer program product are: CD-ROM disks, ROM-cards, floppy disks, magnetic tapes, computer hard drives, servers on a network and carrier waves and digital signals transmitted over a telecommunication link or network connection.

Such computer program may be stored on any data carrier, such as, for example, a disk, a CD or a hard disk of a computer system. It is further provided a method for using a computer system, including standard computer systems, for carrying out the present inventive method. Finally, the present invention relates to a computer system comprising a storage medium on which a computer program for carrying out a method according to the present invention may be stored.

The present invention can be described exemplary along the following figures, which shows:
- Fig. 1:: schematic representation of the inventive method in overview
- Fig. 2:: flow chart: initial communication of a first and a second software program
- Fig. 3:: flow chart: creation of a stub
- Fig. 4:: flow chart: creation of a proxy
- Fig. 5:: flow chart: arranging a stub and a proxy
- Fig. 6:: schematic representation of a computer system to be used in the scope of the present invention
- Fig. 7:: representation of a client-server system to be used in the scope of the present invention
- Fig. 8:: flow chart: calling of a stub
- Fig. 9:: flow chart: calling of the second program through the stub
- Fig. 10:: flow chart: binding a stub and a proxy
- Fig. 11:: flow chart: calling the second software program from a first software program via a proxy and a stub
- Fig. 12:: flow chart: transforming and transmitting a command from the first software program to the second software program

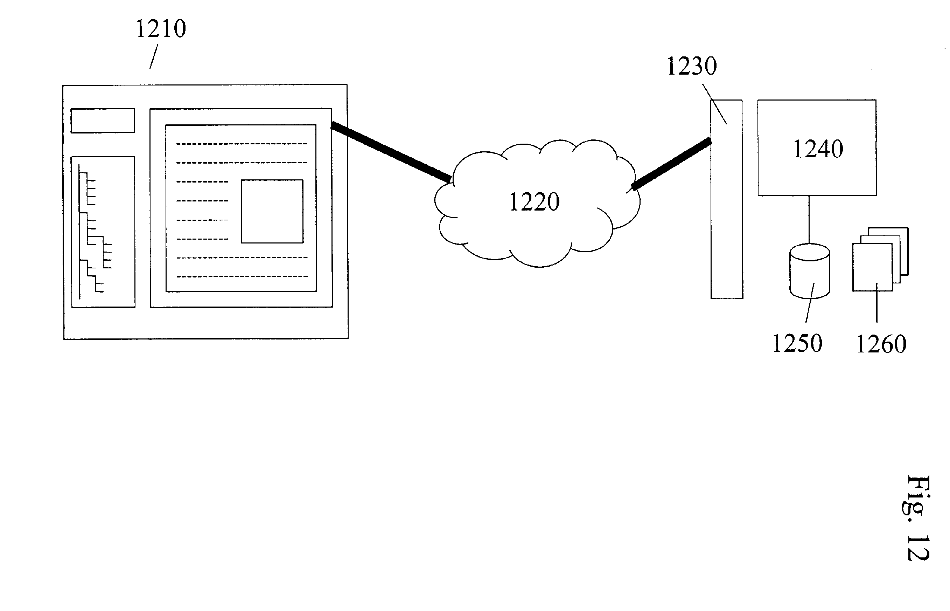

- Fig. 13:: schematic representation of an interceptor arranged between a stub and a proxy
- Fig. 14:: flow chart: use of an interceptor function in an arrangement of stub and proxy

First, reference is made to Fig. 1. A first software program 1, created with any convenient programming language, for example C++, and compiled with a certain compiler for C++, uses a first binary specification. This first binary specification depends on both, the programming language and on the compiler. The first software program 1 may be, for example, able to present numbers in graphical form. In order to calculate the exact dimensions of the graphs the first software program 1 may want to employ a second software program 2, created with another programming language, for example Java, and compiled by using a certain compiler for Java. This second software program 2 uses the second binary specification for communication.

The use of the second software program 2 by the first software program 1 requires its initialization, for example, by calling a loader function 5. The second software program 2 may then initialize its sub-program 2a for creating the stub 4. The sub-program 2a must consider the limited functionality in order to arrive at the desired stub 4, namely a module for transforming commands and responses relating to the requested limited functionality. Based on this limited functionality, the sub-program 2a selects the relevant mappings of the bridge 7 between the second binary specification and the intermediate binary specification.

The first software program 1 may correspondingly initiate a sub-program la to create the proxy 3 in a similar way, by employing the bridge 6 between the first binary specification and the intermediate binary specification. This sub-program 1a may be informed about the limited functionality from the first software program 1. However, it may also know this limited functionality from the second software program 2 by communicating via the communication channel 8. This channel 8 may be any suitable real or virtual connection which allows the transfer of data.

After the stub 4 and proxy 3 have been created they are arranged so as to allow the communication between the first software program 1 and the second software program 2. Once this arrangement is effected the first software program 1 sends the command to be transformed to the proxy 3. The proxy 3 may transform this command from the first binary specification into the intermediate binary specification. This intermediate binary specification corresponds, for example, to the binary UNO specification. The proxy 3 may transmit this command in the intermediate binary specification to the stub 4. The stub 4 may transform the command from the intermediate binary specification into'the second binary specification and may transmit the command then to the second software program 2.

The second software program 2 may execute the command, for example, the command to calculate the dimensions of a graph and may generate a response for the first software program 1. This response may be transformed and transmitted by the stub 4 and the proxy 3 from the second software program 2 to the first software program 1.

The arrows shown in Fig. 1 between the first software program 1, the proxy 3, the stub 4, the second software program 2 and the loader function 5 show the possible routes of communication. The arrows between the proxy 3 and the bridge 6 and between the stub 4 and the bridge 7 represent the contribution of the bridges 6 and 7 to the creation of the proxy 3 and the stub 4, respectively.

Fig. 2 represents an example for the initial communication of a first software program 1 and a second software program 2. The initial communication between the two software programs 1, 2 is carried out, before the creation of the stub 4 and of the proxy 3 is initiated. Due to the different binary specifications used by the two software programs 1, 2, namely the first and the second binary specification, this initial communication will regularly be extremely limited. It may be effected as explained exemplary in the following.

In a first step 20 the first software program 1 may call a loader function 5 for the second software program 2. The loader function 5 may be any known loader function for this second software program 2. A loader function for a program is a software module which "wakes up" this program so that it carries out certain functions. Herein, the loader function may be addressed in one binary specification and may wake up a program using a different binary specification. However, the loader function is not suited to provide any detailed communication between programs using different binary specifications.

The loader function 5 may be used by the first software program 1 from the beginning. This is the case, if the first software program 1 knows or assumes that the second software program 2 does not use the same binary specification as itself, namely the first binary specification. If this knowledge is not present in the first software program 1, it may simply try to call the second software program assuming that it will understand the first binary specification. In this case, the first software program 1 may only employ the loader function 5 if the direct communication with the second software program 2 fails and a corresponding message is returned to the first software program 1.

In the calling step 20 the first software program 1 informs the loader function 5 about the limited functionality requested from the second software program 2. Therefore, the loader function 5 must be suited to receive and carry this information. In order to provide this information to the loader function 5 the first software program 1 may hand over to the loader function 5 the command to be carried out by the second software program 2, so that the second software program 2 may, on receipt of the call of the loader function 5 decide itself which functionality is needed, or the first software program 1 may provide the loader function 5 directly with the description of a limited functionality of the second software program 2 which will be required by the first software program 1.

In step 21 the loader function 5 contacts and initializes a reception function of the second software program 2 to be able to transmit in the next step 22 its information about the limited functionality required from the second software program 2. In the next step 23 the second software program 2 analyses the information received from the loader function 5 regarding the required limited functionality.

After the analysis of the limited functionality required the second software program 2 initializes the creation of a stub 4.

Fig. 3 shows the creation of a stub 4. The stub 4 has the task to transform commands sent by first software program 1 to the second software program 2 from the intermediate binary specification into the second binary specification used by the second software program 2 and to transform responses sent by the second software program 2 back to the first software program 1 from the second binary specification into the intermediate binary specification. Furthermore, the stub 4 may be assigned the task to transmit the transformed commands or responses to the recipients, the second software program 2 or the proxy 3, respectively.

In step 30 the second software program 2 may initialize a sub-program 2a for creating the stub 4. This sub-program 2a may be an integral part of the second software program 2 or it may be as well a separate independent software module which can be used by this and potentially any other second software program 2. Accordingly, the sub-program 2a may be stored on the computer system or storage device on which the second software program 2 is stored. However, the sub-program 2a may also be stored on another computer system or storage device to which the second software program 2 has access.

In step 31 the sub-program 2a receives from the second software program 2 a description of the limited functionality required from the second software program 2. Then, in step 32 the bridge 7 between the second binary specification used by the second software program 2 and the intermediate binary specification is contacted. This bridge 7 provides a mapping of at least all basic commands between the mentioned two binary specifications. It may be stored at any place accessible for the sub-program 2a. In many cases there may exist a library with bridges for a number of second binary specifications, assuming that the intermediate binary specification used would be the same for all intended operations.

From the selected bridge 7 the sub-program 2a chooses in step 33 the mappings necessary to use the required limited functionality of the second software program 2. This means all transformations, but not more than these, must be selected which are required to transform commands and responses which could arise when using the relevant functionality. Finally, in step 34 the sub-program 2a creates the stub 4 based on the chosen mappings.

Fig. 4 represents in the form of a flow chart the creation of the proxy 3. The proxy 3 has the task to transform commands and responses between the first binary specification and the intermediate binary specification. It is insofar similar to the stub 4 which has, as it was described above, the task to render these transformations between the second binary specification and the intermediate binary specification.

In step 40 the first software program 1 may initialize a sub-program la for creating the proxy 3. This sub-program may be an integral part of the first software program 1, but may as well be separate and independent from it. The sub-program la may be accessible for a larger number of first software programs 1. In step 41 the sub-program 1a receives from the first software program 1 information regarding the limited functionality required from the second software program 2. This information may be provided by passing on the actual command the first software program 1 plans to send to the second software program 2, so that the sub-program 1a may derive from this command the information about the limited functionality, or the first software program 1 may provide the sub-program 1a with a description of the limited functionality.

In an alternative embodiment the description of the limited functionality may be received from the sub-program 2a for creating the stub 4. The sub-program 2a has the required description, because it has to create the stub 4 according to the same description. The description may be exchanged between the sub-program 2a and the sub-program 1a by any suitable means of communication.

In yet an alternative embodiment the description of the limited functionality of the second software program 2 may be derived directly by mapping the stub 4 into the first binary specification, in order to create a proxy. This is possible, because the stub 4 reflects the required limited functionality in listings between the second binary specification and the intermediate binary specification which are necessary for the transformation of commands and responses. Therefore, the intermediate binary specification side of the listings of the stub 4 may be taken as the starting point for the creation of the proxy 3, which is completed by adding the corresponding parts of the listing in the first binary specification, as will be explained below.

In step 42 the sub-program 1a contacts the bridge 6, which provides a mapping of basic commands of the first binary specification and the intermediate binary specification, and builds, in step 43, the desired proxy 3.

The proxy 3 and stub 4 are then arranged to allow the desired communication between the first software program 1 and the second software program 2, as it will be described in the following along the flow chart of Fig. 5. The arrangement of proxy 3 and stub 4 requires that the path of exchanging transformed commands and responses between the proxy 3 and the stub 4 is defined.

Therefore, in step 50 the second software program 2 informs the first software program 1 about the address information necessary to contact the stub 4 via the communication line 8. The communication line 8 may consist of a simple data line for transmitting binary address information which can be understood from the first software program 1 without being able to use the second binary specification in which the second software program 2 communicates.

The first software program 1 provides, in step 51, the sub-program la with this received address information, which, in step 52, is passed on to the proxy 3. The proxy 3 then contacts, for the first time in step 53, the stub 4, the address of which is now known. In step 53 the proxy 3 will also transmit its own address information to the stub 4, thereby allowing the stub 4 to contact the proxy 3. Herewith, the proxy 3 and the stub 4 are arranged for communication, that means they can send and receive commands and responses to commands. This arranging step is also referred to as binding.

Fig. 6 shows a computer system 60 which may be used in the scope of the present invention. The computer system 60 comprises an i-/o-interface 61, a central processing unit (CPU) 62 and memory 63. It is connected to an external memory 64 on which mass data may be stored as well as software programs. Furthermore, the computer system 60 is connected via the i-/o-interface 61 to an output device 65, for example, a screen, and to an input device 66, for example, a keyboard.

The inventive method may be applied in the shown standard computer system. The first software program 1 and the second software program 2 may be stored in the internal memory 63 of the computer system 60, as well as on its external memory 64. It is also possible that one of the programs is stored on the internal memory 63 and the other is stored on the external memory 64. The proxy 3 and the stub 4 may be created by means of the CPU 62.

The method according to the present invention may also be implemented and used on more than one computer system, for example, in a network or in a client-server system, as it is shown exemplary in Fig. 7.

Fig. 7 shows a client 70 which is connected to a server 71. This connection may be a data line 72, including any kind of permanent or temporary network, like, for example, the internet. It is understood that, instead of only one client, there may be a large number of clients connected to the server. In the scope of the present invention the first software program 1 may, for example, be stored on client 70, while the second software program 2 may be stored on server 71. The exchange of commands and responses may be effected via data line 72. For example, the bridges 6 and 7, as well as any other potentially needed bridges may be stored in one or more libraries on the server 71. The sub-programs 1a and 2a may also be stored on the server 71. In case the sub-program la is needed the client 70 may request from the server 71 its transmission via data channel 72.

It is understood that the present invention may also be implemented in a variety of embodiments. In the following one embodiment of the present invention is described in more detail along Figures 8 to 11 and Tables 1 and 2.

### Creation of stub and proxy:

In response to a call of a first software program a proxy and a stub will be created in the so-called proxy factory and the stub factory, respectively. In order to create a proxy and a stub three tasks have to be carried out. First, the first software program using the first binary specification has to be enabled to communicate with to the second software program using the second binary specification. Second, the stub factory has to create a uno_interface implementation considering the second binary specification based on the limited functionality which delivers all calls directed to the second software program to this second software program. This uno_interface is program code which is defined for the limited functionality. For the generation of the uno_interface implementation the stub factory employs information in the form of a type description. This uno_interface implementation is also referred to as the stub. Third, the proxy factory has to create a uno_interface implementation for the first binary specification. The proxy factory generates its uno_interface implementation based on the information of the type description. This uno_interface implementation is referred to as the proxy.

The knowledge of the type description is necessary to create the stub and the proxy, as described. This type description is the full description of the limited functionality, also called interface. It contains the information about the required limited functionality of the second software program which shall be used by the first software program. The type description may refer to different types shown in Table 1.

**Table 1:**

| ***Type*** | ***UNO*** | ***C*++** | ***Java*** |
|---|---|---|---|
| Byte | Signed 8 Bit | Signed 8 Bit | Signed 8 Bit |
| Short | Signed 16 Bit | Signed 16 Bit | Signed 16 Bit |
| Ushort | Unsigned 16 Bit | Unsigned 16 Bit | Signed 16 Bit |
| Long | Signed 32 Bit | Signed 32 Bit | Signed 32 Bit |
| Ulong | Unsigned 32 Bit | Unsigned 32 Bit | Signed 32 Bit |
| Hyper | Signed 64 Bit | Signed 64 Bit | Signed 64 Bit |
| Uhyper | Unsigned 64 Bit | Unsigned 64 Bit | Signed 64 Bit |
| Float | Processor dependent: Intel, Sparc = IEEE float | Processor dependent: Intel, Sparc = IEEE float | IEEE float |
| Double | Processor dependent: Intel, Sparc = IEEE double | Processor dependent: Intel, Sparc = IEEE double | IEEE double |
| Enum | The size of an machine word. Normally this is the size of an integer. | The size of an machine word. Normally this is the size of an integer. | All enum values of one enum declaration are static object of a class. Each object contains a 32 bit value which represents the enumeration value. |
| Boolean | 1 Byte. | 1 Byte. | Boolean |
| Char | 16 Bit on WNT, W95, W98, Os2. 32 Bit on Unix | 16 Bit on WNT, W95, W98, Os2. 32 Bit on Unix | Unsigned 16 bit (char) |
| String | A pointer to a structure which have the following members: long refCount; long length; wchar_t buffer[...]; The string in buffer is 0 terminated. This is the rtl_wString structure in the rtl-library | A pointer to a structure which have the following members: long refCount; long length; wchar_t buffer[...]; The string in buffer is 0 terminated. This is the rtl_wString structure in the rtl-library | "java.lang.String" |
| Structure | The structure contains the members in the order of the declaration. The memory layout is described at the beginning of this chapter. | The structure contains the members in the order of the declaration. The memory layout is described at the beginning of this chapter. | A class which is derived from "java.lang.Object" and contains the members in the specified order. |
| Union | The size is 4 + size of the largest type. In front of the union members are a long value (nSelect) which describes the position of the valid member (0 is the first). | The size is 4 + size of the largest type. In front of the union members are a long value (nSelect) which describe the position of the valid member (0 is the first). | Not specified yet |
| Sequence | A pointer to a structure which has the following members: void * pElements; long nElements; long nRefCount; The nElements are a memory area that contains nElements elements. | A pointer to a structure which has the following members: void * pElements; long pElements; long nRefCount; The pElements are a memory area that contains nElements elements. | It is a normal Java array. |
| Exception | Looks like a structure | Looks like a structure | A class which is derived from "java.lang.Exception" and contains the members in the specified order. |
| Interface | The interface is a pointer to a function table, which contains 3 functions. | It is a pointer to a C⁺⁺-Class which implements first the virtual methods query-Interface, acquire and release. | It is a normal Java interface. |
| Any | This is a structure that contains a pointer to a type description. The second member is a pointer to the value stored in the any. | This is a structure that contains a pointer to a type description. The second member is a pointer to the value stored in the any. | A class which is derived from "java.lang.Object". The members are a class, which describe the type of the value. A second member which is the value of the any. |
| Void | No memory representation | No memory representation | No memory representation |

Many of these types are self-explaining and known in the art. Nevertheless, the most relevant types of the type description will be explained in more detail below.

"Interfaces": All interfaces employed in connection with the present embodiment are derived from a Super-Interface. Each interface contains at least three methods. The two methods "acquire" and "release" are necessary to control the lifetime of the interface. The third method "queryInterface" is used to navigate between different Interfaces. A XInterface includes only these three methods. All other interfaces are derived from this XInterface. The methods and functionalities requested by the first software program will be part of the interface.

In Java, for example, interfaces are mapped to Java interfaces which could be normally implemented. The methods acquire and release are not mapped to the Java program since this methods do not exist in Java. The lifetime of the proxy, the stub and the relevant information in the second program will be controlled by a garbage collector. The programming language Java delivers basic types by value and non-basic types by reference. All calls are specified by value except interfaces. So in Java all non-basic types returned or delivered through out parameters are by value, which means that the implementation must copy it before return or deliver.

In C++, for example, interfaces are mapped to pure virtual classes. In order to automatically control the lifetime of interfaces a template called "Reference" will be used. All return, parameter and member types are "References" (e.g.: Reference< XInterface >). The "Reference" acquires the interface when it is constructed and releases the interface when it is destructed.

"Structure": A structure is a collection of elements. The type of each element is fixed and it cannot be changed. The number of elements is fixed.

"Exceptions": An exception is a program control construct beside the normal control flow. One major feature of exceptions is, that it is simpler to implement the error handling. Exceptions are similar to structures since they are also a collection of elements and each type of each element is fixed and cannot be changed and the number of elements is also fixed. An additional feature of exceptions is that they can be thrown by a method. All exceptions which can be thrown by a method must be declared at the method, except for the called "RuntimeException" which always can occur. All exceptions must be derived from "Exception". If an exception is declared at a method it is allowed to throw all derived exceptions. The caller of a method must respond to this behavior.

In Java, for example, all exceptions are derived from the "java.lang.Exception". The exceptions are declared at the methods.

In C++, for example, the exceptions are generated as structures. An exception is thrown as instance (e.g.: throw RuntimeException()). At the other side the exception should be caught as reference (...catch(RuntimeException &) { ... }).

"Union": A union contains one element. The declaration of a union specifies the possible types.

"Array": An array contains any number of elements. The type of the elements is fixed and cannot be changed.

"Any": An any contains one element. All types of elements are possible. An any contains a reference to the value and the type description of the type. With the type description the bridge can transform the value, if necessary.

In Java the any is, for example, represented by the class "Any", which contains a class as type description and a "java.lang.Object", which is the value. The basic types are wrapped to their proper classes. For example, a boolean value is an object of the class "java.lang.Boolean", which contains the value.

In C++ the any is represented through the class "Any". Each type generated by a C++ codemaker implements an function "getCppuType". This function is used to implement the template access operators "<<=" and ">>=". These operators insert and extract the value of the any.

"Sequence": A sequence is a generic data type. It contains the number of elements and the elements. In Java the specification of an array fulfills this specification. This is not true for C++. The array in C++ does not contain the number of elements. It is not possible to return a C++-array, e.g. Char[] getName() is not possible. It is difficult to manage the lifetime between the called and the caller, if only a pointer is returned. Therefore, in C++ a sequence is a template with the name "Sequence". The implementation contains a pointer to a structure which contains a pointer to the elements, the number of elements and the reference count. So it holds the binary specification. It is cheap to copy this sequence, because only the reference count is incremented.

The type description may exist or it may be runtime created. Each existing type is stored in a type repository along with the corresponding type description. The types of the type description are accessible through the full name of each type in the type repository. For example, the full name of the type "Xinterface" may be "com.sun.star.Xinterface".

In a type repository the types needed for any type description are stored in any appropriate way. If the API (application program interface) of the type repository is c-style, it is directly, that means via a binary representation, accessible from many binary specifications and it is quickly transferable. Since the type description of each element may be used during the generic marshaling of a call, the access performance of the type repository API is critical. Therefore, it is useful to use c-style structures, which describe each type. In addition, there may be interfaces declared which specify the access to the type repository. The module of this interface is "com.sun.star.typelib".

All functions or type declarations have the prefix "typelib_". All elements are reference counted. All elements start with the structure "typelib_TypeDescription". It is possible to cast all descriptions to this type. The function typelib_typedescription_newInterface will be used to create an interface description. The descriptions of structures, unions and sequences are created with the function typelib_typedescription_new. The description of the base type is initially part of the type repository. The function to get a type description is typelib_typedescription_getByName.

The Java API to the type repository is different for two reasons. First, Java cannot access the binary representation of the type descriptions directly. Second, the Java runtime system provides an API (core reflection) similar to the type repository API. Unfortunately, the features "unsigned", "oneway" and "out parameters" are missing in this API. For this reason, additional information is written into the classes.

The representation of the types depends on the hardware, the language and the operating system. The base type is swapped, for example, if the processor has little or big endian format. The size of the types may vary depending on the processor bus size. The alignment is processor and bus dependent. The alignment of the data structure is defined through the following algorithm:
Structure members are stored sequentially in the order in which they are declared. Every data object has an *alignment-requirement.* For structures, the requirement is the largest of its members. Every object is allocated an *offset* so that *offset % alignment-requirement ==* 0

If it is possible that the maximum alignment can be restricted (Microsoft C/C++ compiler, IBM C/C++ compiler) than the size maximum alignment is set to eight.

Under this condition the alignment is set to min( n, sizeof( item ) ). The size is round up to the largest integral base type.

For the Microsoft and IBM C/C++ compiler the alignment of structure is set to eight using the "#pragma" statement. Table 1 shows the binary UNO, C++ and the Java types.

In order to address the proxy factory to generate the proxy the first binary specification has to be denominated. This will be a string, because it is extensible and the risk of double names is low. Then a tool for selecting the desired bridge is called. The first parameter for this tool is the "first binary specification" and the second parameter is the intermediate binary specification "UNO". Then a function is called for selecting the desired mapping of the bridge. The name of the function is, in this example, "getMappingFactory". A call to create a proxy in "objective c" will be "getMappingFactory("objective_c", "uno")". The implementation of the function will search a shared library named "objective_cuno" to find the right library that contains the proxy factory. In Java the tool may search for a class of name "objective_cuno".

In order to create a stub merely the parameters of the function have to be changed, in our example to "getMappingFactory("uno", "objective_c")". A stub implements the uno_interface. In the dispatch function the stub must call the right method of the original object. This is simpler in a programming language like Java, which has a "core reflection API", than in a programming language like C++, which has no binary standard and no API to call virtual methods.

In creating a proxy the proxy factory must generate method code to implement each method specified in the interface to be created. The only information to do this is a type description of the interface. For example: In Java (1.1) a binary class file (^{*}.class) must be generated and loaded with the class loader. In the absence of a loader which can directly load binary classes a loader has to be provided. In C++ virtual method tables must be generated which delegate each call to the uno_interface. In the absence of a binary C++ specification individual compilers (version, switch,...) may have to be explored in order to implement this.

The proxy and the stub factory employ bridges for the generation of the proxy and the stub, respectively. A bridge implements infrastructure to exchange interfaces between two environments and is bidirectional.

An environment contains all objects which suffices the same specification and lies in the same process address space. The environment is specific for a programming language and for a compiler. For example, an object resides in the "msci" environment, if it is implemented in C++ and compiled with the Microsoft Visual C++ compiler. It may also be session specific for some reason, e.g. when running multiple Java virtual machines in one process. In the latter case these virtual machines have to be distinguished. However, this case is not a common case.

Regularly, the environment is the area in which the same binary specification is employed. Therefore, the first software program and the second software program belong to different environments.

Each bridge is implemented in a separate shared library. The name of the library is a connection of two environment names with an underscore ('_') between the names. Each bridge library exports two functions called "uno_ext_getMapping" and "uno_initEnvironment". The first function is called to get the mappings.

In order to get a mapping uno_getMapping() has to be called. There is also a C++ class called cppu_Bridge which can be used with the source and destination environment names. The uno_ext_getMapping() call then receives its source and destination environments. The bridge library cannot be unloaded while any code of it is still needed. So both mappings and any wrapped interface (proxy) that is exported needs to modify a shared library wide reference count. If the shared library can be unloaded the reference count goes to zero.

The intention of an environment structure is to provide common functions like acquireInterface() and to know all proxy interfaces and their origins. This is specifically important because of the object identity of an interface. The proxy, the stub and the second program are defined to provide the same instance of the XInterface any time it is queried for it. This is important to test, if two interfaces belong to the same object (e.g. testing the source of an incoming event).

When interfaces are mapped around some environments in space, they must provide the same XInterface in each environment (e.g. in C++, equal XInterface pointers).

It is not recommended to only keep an eye on this object identity issue. It is well recommended to reuse any interface, i.e. rejecting the production of proxy interfaces as often as possible, because each constructed proxy interface leads to another indirection when called, and there will of course be many interfaces.

So an environment knows each wrapped interface (proxy) running in it and the origin of each of these interfaces. Table 2 shows the representation of an environment.

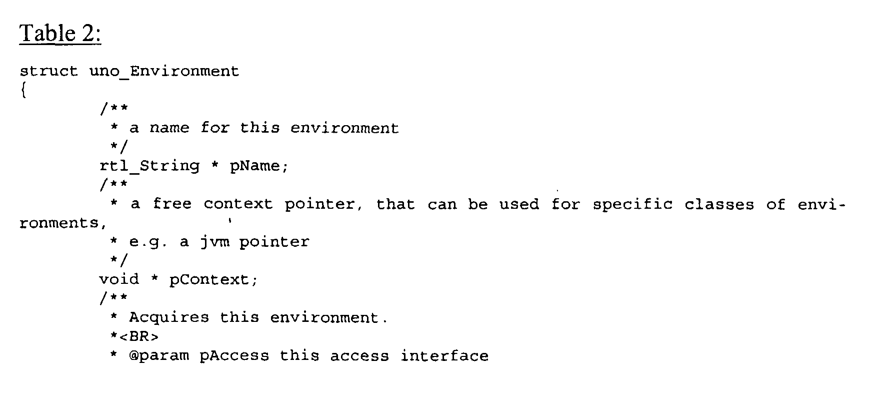

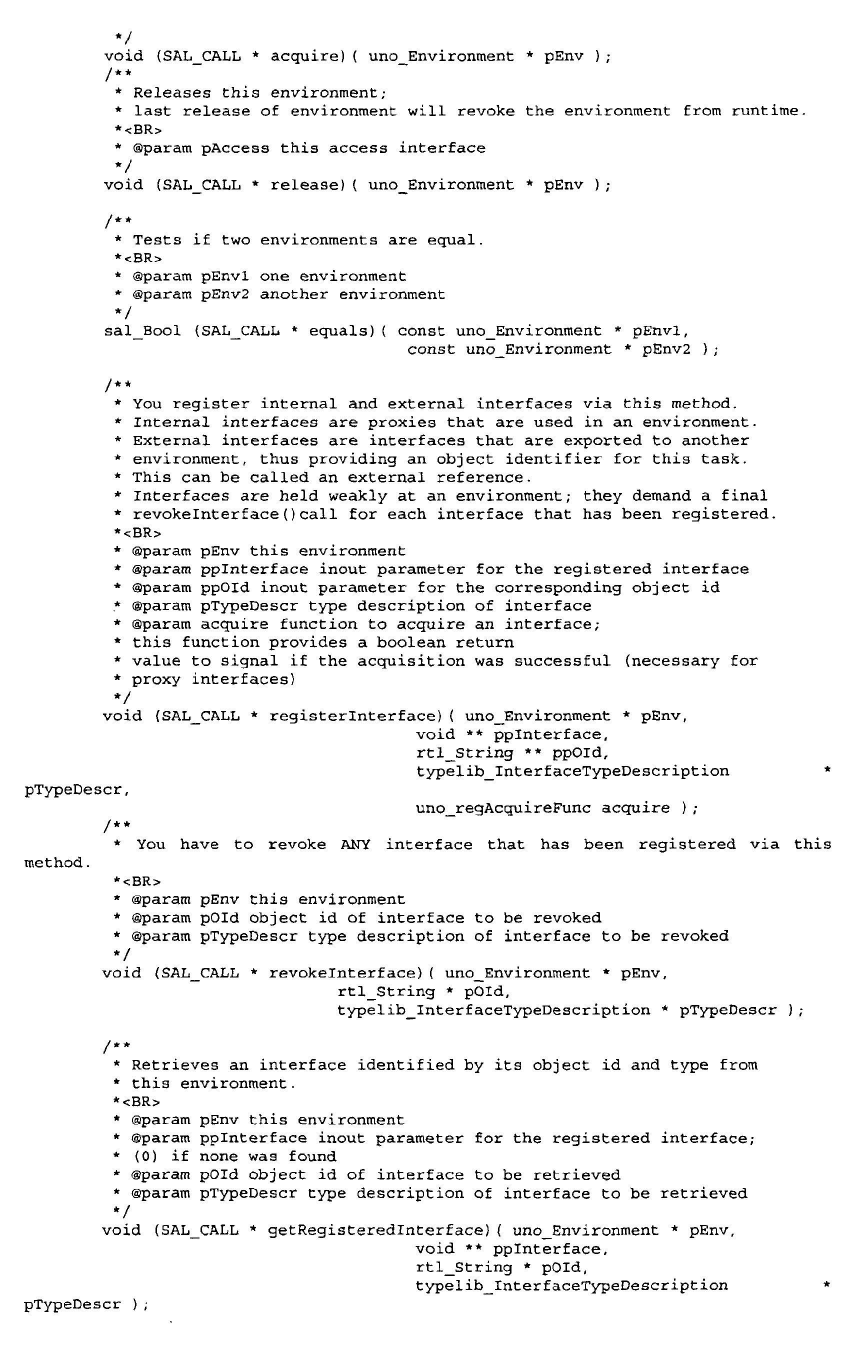

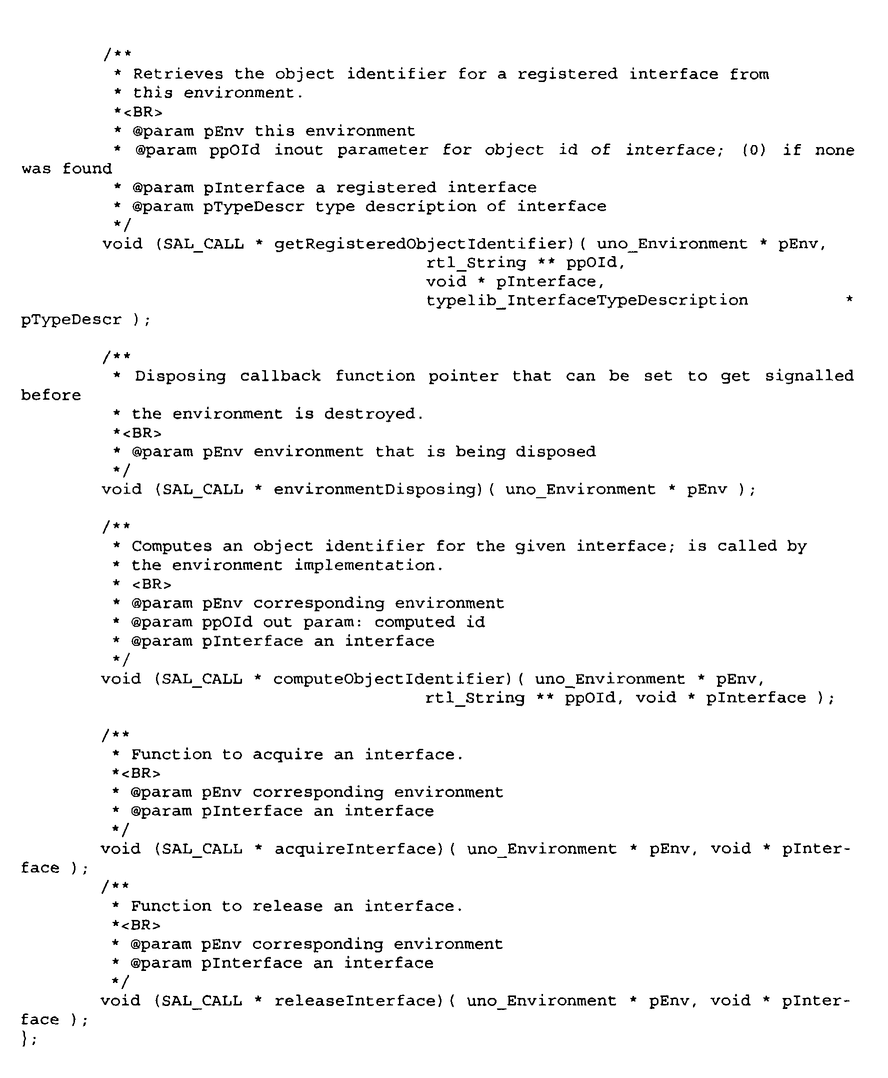

Environments, as defined above, consist of several fields. The first dields are used for identifying the environment, for specifying the hardware, the process, and maybe a session specific ID. There is also a context pointer which can be used for specific classes of environments, e.g. when it is known that there is a Java environment the virtual machine pointer can be stored there.

In order to use environments, these environments regularly have to be registered. An existing environment may be obtained by calling uno_getEnvironment(). A new environment can be created by either implementing it directly or by using a simple default implementation, which is frequently also sufficient, by calling, in the given example, uno_createDefaultEnvironment() with the environment's name and its acquire and release function for interfaces.

In order to improve the performance the bridges should use the shortest way between two environments. Especially, if there are programs instantiated in the identical environment, the communication between them should be direct and not over a proxy and a stub.

Mapping is the direct way to publish an interface in another environment. That means an interface is mapped from a source environment to a target environment so that methods may be invoked on a mapped interface in the target environment which are delegated to the originating interface in the source environment. A mapped interface may also be called a proxy or a stub. Mapping an interface from an environment A to an environment B requires that several steps are performed: First, the origin of the interface from environment A has to be retrieved (call getInterfaceOrigin() on environment A). For this purpose, the environment A looks into its proxy interfaces table to check if there is such an interface already known (pointer and type). If the answer is no, then this interface must originally come from environment A, or else it must originate from any other environment and its origin must be known, since each proxy interface must have been registered with its origin. Second, an existing proxy interface has to be looked for in environment B with the same origin and type (call getInterface() on environment B). If a proxy interface of that origin and type is already in use in environment B, then this interface is acquired, or else a new proxy has to be constructed wrapping the source interface from environment A. The fresh proxy interface is then to be registered via registerInterface() on its first acquire() and revoked via revokeInterface() on its last release() from its environment. This second step has to be synchronized with other threads in order to get access to mapping tables of an environment by getting an access interface (lockAccess()) from the environment. Then an unlockAccess() function has to be called.

### Function of stub and proxy:

The stub is encapsulated in an object which delivers and transforms the binary specification adapted calls to the stub. This object is the proxy of a stub in the first binary specification. This proxy which calls and attributes access will be similar with the binary specification from which the call was made. The calling to the stub is shown in Fig. 8.

First in step 81 a type save call (e.g. acquire, queryInterface, ...) is made at the proxy 3. This type save call will be transformed by the proxy 3 to a corresponding call in step 82 and dispatched to the stub 4 in step 83. After that, the return value of this call is transformed in step 84 to the type expected by the binary specification.

The proxy is binary specification specific. So it is possible to put this object seamless into the binary specification.

A stub object is also created which implements an uno_interface and transforms and delegates the calls to the second program implemented in a specific programming language (e.g. C++, Java,...). Fig. 9 describes a call through a stub 4 to the second program 2.

In a first step 91 the dispatch function is called. If proxy and stub are running in the same process, the dispatch function of the stub is directly called by the proxy. In a distributed environment this is not possible. In this case the abstract virtual channel has to provide this functionality. On the proxy side the proxy will accept the request and transmit it to the stub side. On the stub side the stub has to call the dispatch function.

The stub 4 detects the interface and the method which should be called at the second program 2. Then in step 92 the call was transformed into a specific binary specification by the stub 4 and the second program 2 was called in step 93. After that, the return value was re-transformed to the other binary specification in step 94.

The stub makes all transformations to the binary specification in which the second program is implemented. This is in this example the second binary specification. This makes it possible to implement the second program in the second binary specification. For example: In C++ exceptions, multiple inheritance and derivation can be used. In addition to the binary specification there are the type descriptions which must be mapped in the binary specification of the second program.

In order to enable to call from one binary specification or object model to another the stub and the proxy have to undergo a binding process. The proxy allows to call from one binary specification to the uno_interface, while the stub allows to call through the uno_interface to the second program. The binding of the stub and the proxy is initiated by the first software program 1 and is shown in Fig. 10. In a first step 101 the generation of a stub with the binary UNO specification in the stub factory 102 is shown. In a second step 103 a proxy is created based on the generated stub in the proxy factory 104.

Each call to the proxy is delivered to the stub. The stub prepares the call and calls the second program in the corresponding binary specification. Fig. 11 shows exemplary the call from a first software program 1 in a programming language like "objective c" to a second software program 2 which may be implemented in the programming language C++.

The first software program 1 uses the programming language "objective c". The proxy 3 makes the interface available to the first software program 1 in the first binary specification. This means the first software program 1 uses the first binary specification to manipulate the second software program 2. For example, this may be effected by the call "char * pOldText = [myObject changeText: "test"]" in step 111. The proxy 3 transforms the parameter of type string to the binary specification in step 112. Then, the proxy 3 dispatches in step 113 the call to the stub 4. The necessary information, including a method type description, parameters, an address for the return value and an address for the exception, if any occurs, is delivered to the stub 4. The stub 4 transforms in step 114 the string from the binary UNO specification to a second binary specification string. The stub 4 calls the right method at the second software program 2 in step 115, in our example "pComponent->changeText("test")". The stub 4 must catch all kind of exceptions thrown by the second software program 2. If the method returns normally, the string is transformed in the step 116 to the binary UNO specification and stored at the place given through the dispatch call. If an exception is thrown, the exception is transformed and stored at the address given through the dispatch call. After the dispatch call returns the proxy 3 transforms in step 117 the string to a first binary specification string and returns from the "changeText" call. If the call terminates by an exception, the exception is returned to the first software program 1. It is up to the first binary specification in which manner the exception occurs (the "objective c" language does not support exception handling).

Fig. 12 shows the advantage of the binary UNO specification as an intermediate binary specification as it was described above. In a first step 121 the first software program 1, for example written in the programming language C++, transmits one command in a first binary specification, in this example the command "setText("a test")", to the proxy 3. Regularly, the first software program will transmit more than one command, for example, also the acquire, the release and the queryInterface command as described above. This command will be transformed by the proxy 3 in the next step 122 from the first binary specification into the binary UNO specification. The command in the binary UNO specification contains the following information: the parameter "a test", the return address, an address for the exceptions, and the type description of the command "setText". The type description of this command will include, in this example, the name of the command (setText), the type of the parameter and the return type. This transformed command will be transmitted to the stub 4 in the step 123. Then, the stub 4 transforms in step 124 the command from the binary UNO specification into the second binary specification, employed by the second software program 2 which was written, for example, in the programming language Java. The stub 4 employs for this transforming step only one dispatch mechanism. This is a mechanism which will be employed for each command transmitted by the proxy 3, since it is able to dispatch the name of the command and the other relevant information to the second software program 2. In the final step 125 the second software program 2 executes the command "setText". The response to this command will be transmitted and transformed in a corresponding way.

Fig. 13 shows a scenario where between the proxy 3 and the stub 4 an interceptor 130 is inserted. This means, that the stub 4 and the interceptor 130 are created in a first step, while in a second step the stub 3 is created based on information about the stub 4 and the interceptor 130. Therefore, the proxy 3 will communicate only with the interceptor 130 and not with the stub 4.

Such an interceptor may be able to carry out, for example, an accounting function or a security check function. If, for example, the first software program 1 wants to use a functionality of the second software program 2, the interceptor may be able to discover if the user of the first software program is authorized to use this function and to debit the account of the user, if the user has to pay for this functionality. Such an interceptor may also be used, for example, to help debugging the communication between a first software program 1 and a second software program 2. In such a case the interceptor may provide an alarm function which will be initiated, if a predefined functionality is called. If the functions requested from the second software program 2 may be grouped as one transaction, it may also be possible that an interceptor cancels all already executed functions of this group, if one function fails. Such an interceptor has the advantage that only one interceptor may be employed for every function or method of an interface and for all binary specifications of software programs which communicate via the intermediate binary specification used by the stub 4 and the proxy 3.

Fig. 14 shows a flow chart representing the use of an interceptor as checking and accounting function for a fax service. In this example, a user of a first software program using a first binary specification wants to use the fax service of a second software program using a second binary language. This fax service may distinguish between two kinds of users. A standard user may have to pay for each fax and a premium user may have to pay a monthly standard fee.

In order to enable the communication between the two software programs a stub and a proxy will be created and combined and arranged together with a specific interceptor in a way shown in Fig. 13. Then, the following steps may be carried out in using the invention.

In step 140 the first software program sends a command including the desired fax number, the corresponding fax file and the identity of the user to the proxy. The proxy transforms this command into the intermediate binary specification and forwards it to the interceptor in step 141. The interceptor checks in step 142 whether the user is a standard user.

If the answer is "Yes", that means the user is a standard user, the interceptor may deteremine in step 143 whether the user has enough credit. If the answer to this question is "No", the user will be informed about his insufficient credit status and about the fact that the fax was yet not sent in step 144. If the answer is "Yes", that means that the user has enough credit, the interceptor will initiate, in this example, the debiting of the user's account in step 145 and forward the received command to the stub in step 146.

If the answer in step 142 is "No", that means the user is a premium user, the interceptor will forward the command received from the proxy directly to the stub in step 146. The stub will transform this command from the intermediate binary specification into the second binary specification and forward this command to the second software program in step 147. Then the fax may be sent.

It will be understood that the present invention is not limited to the examples given and explained in detail.

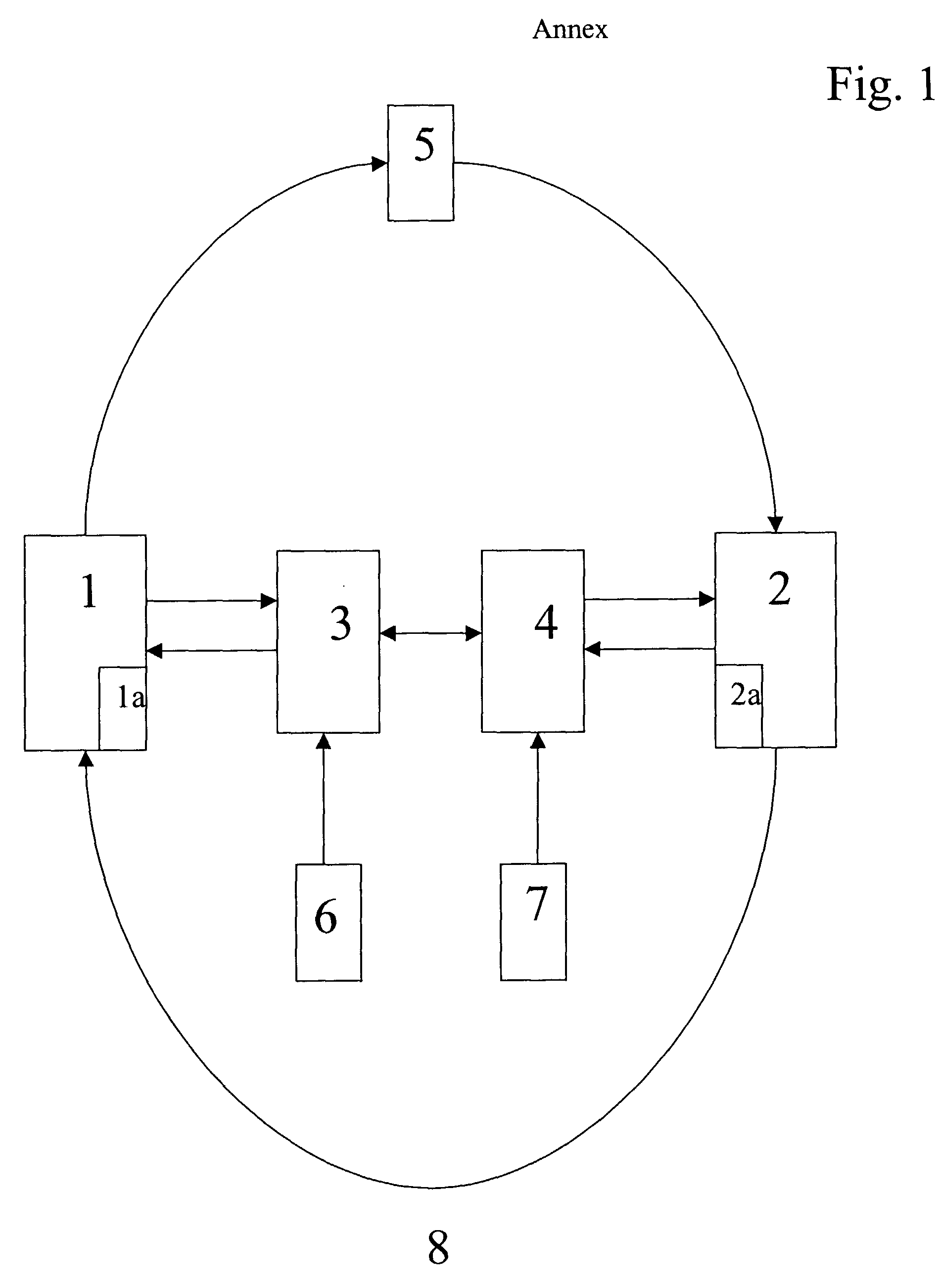

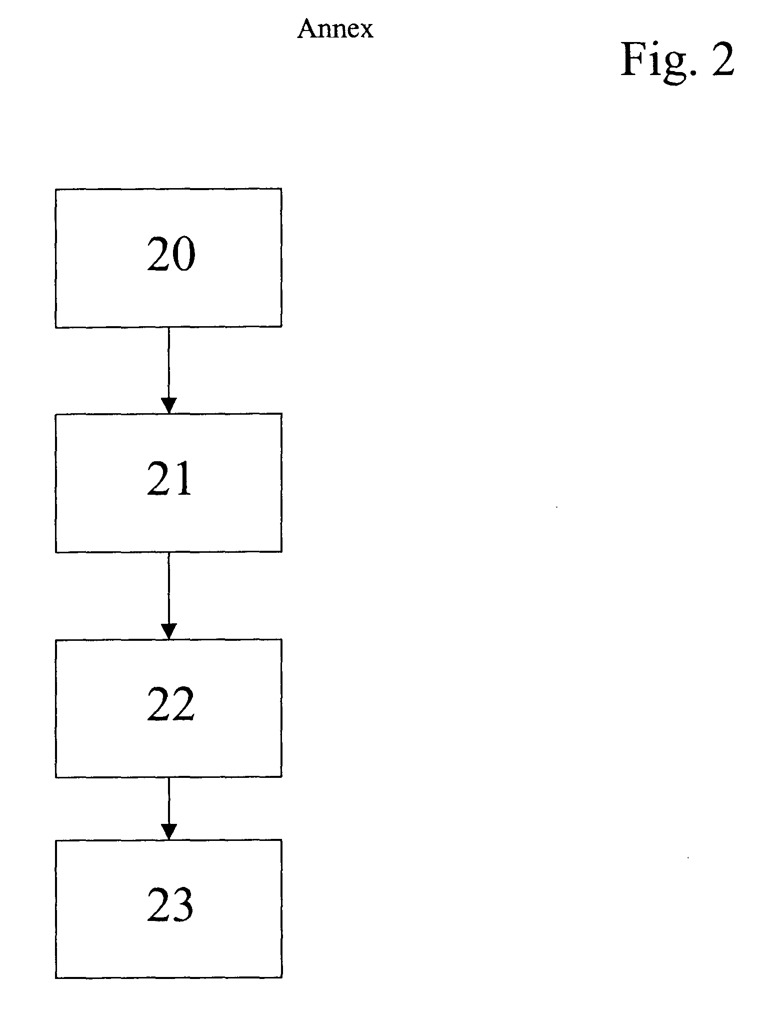

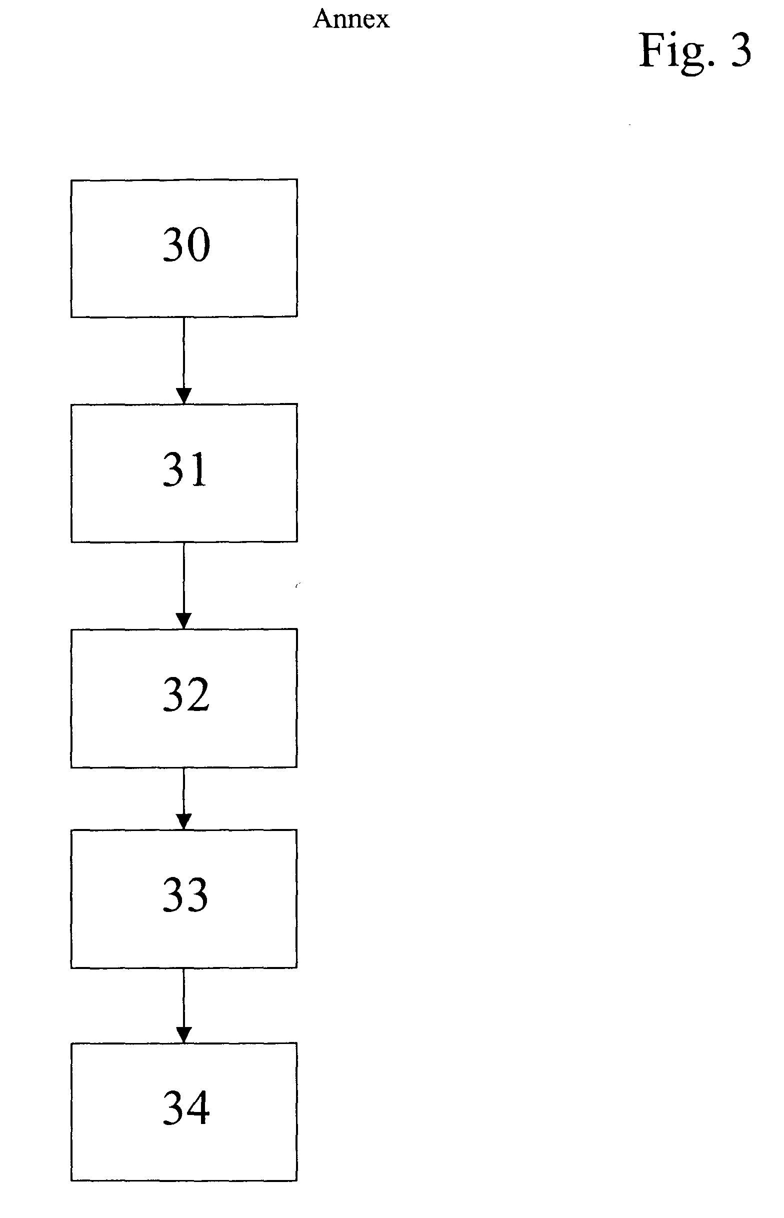

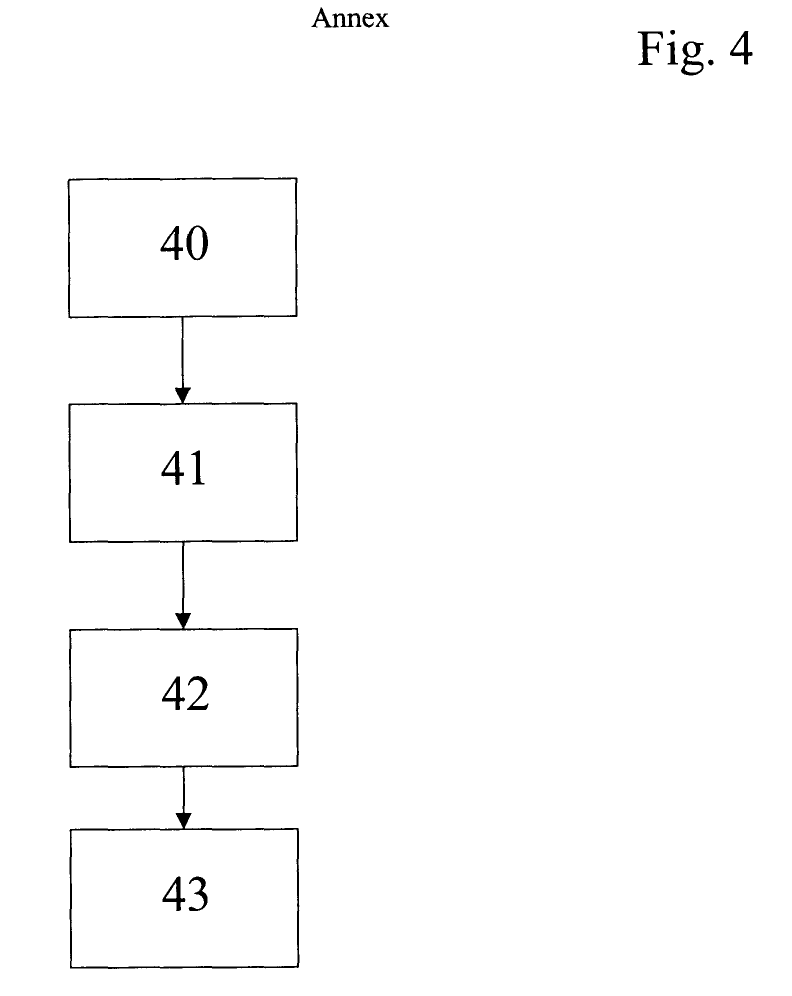

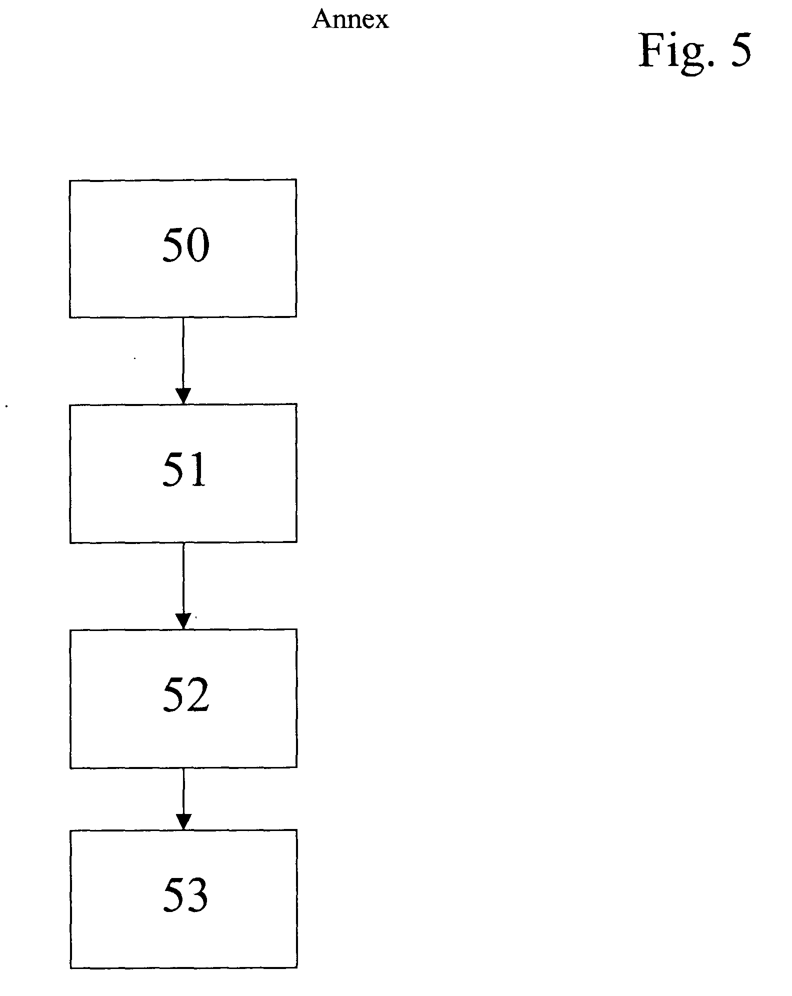

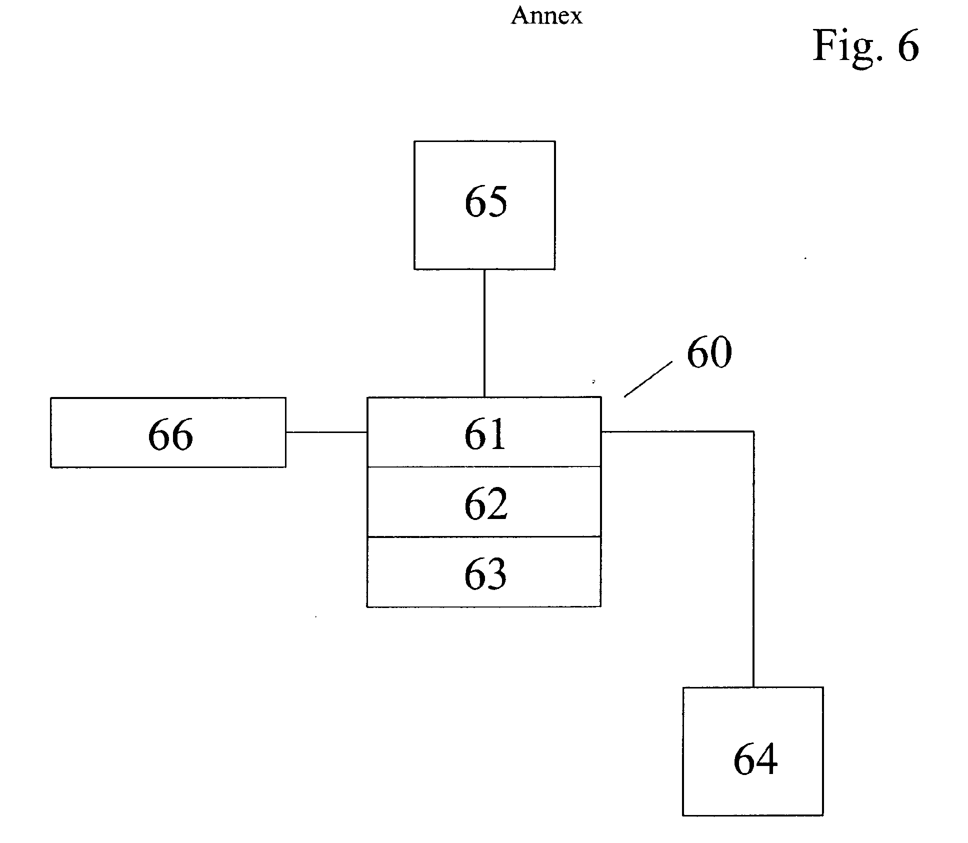

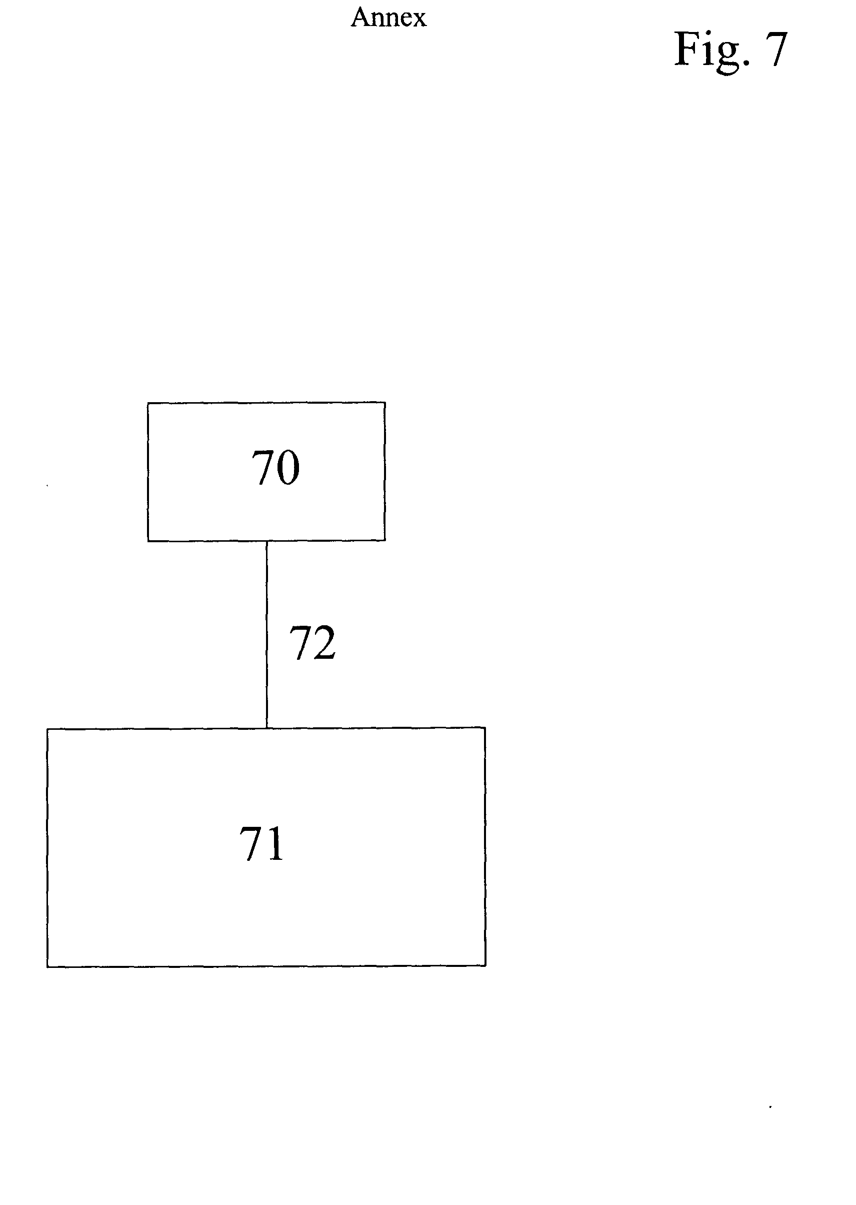

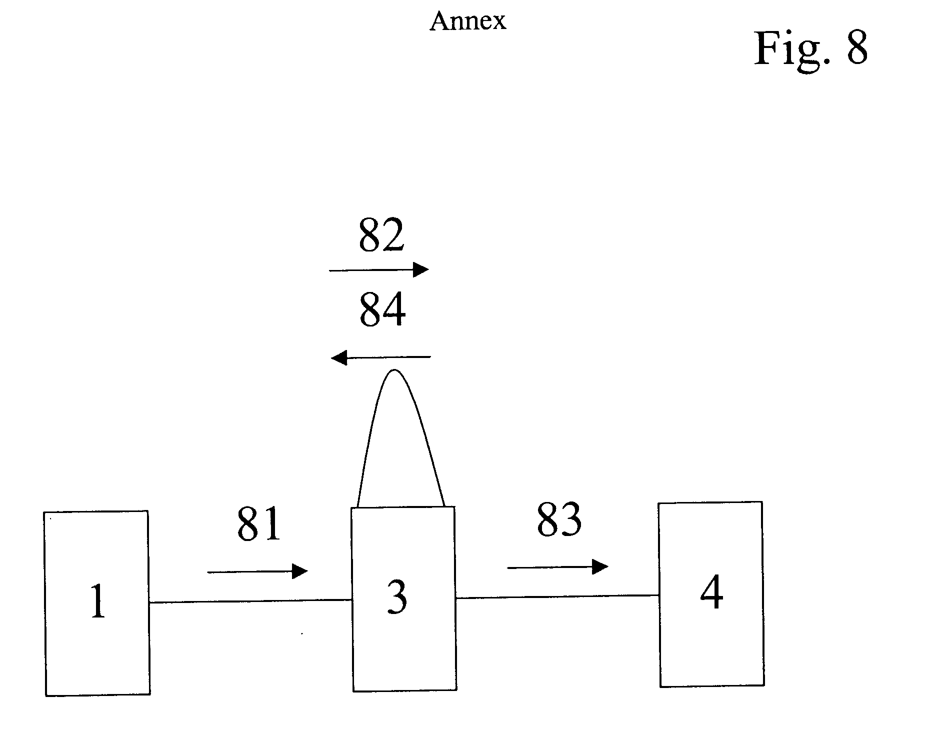

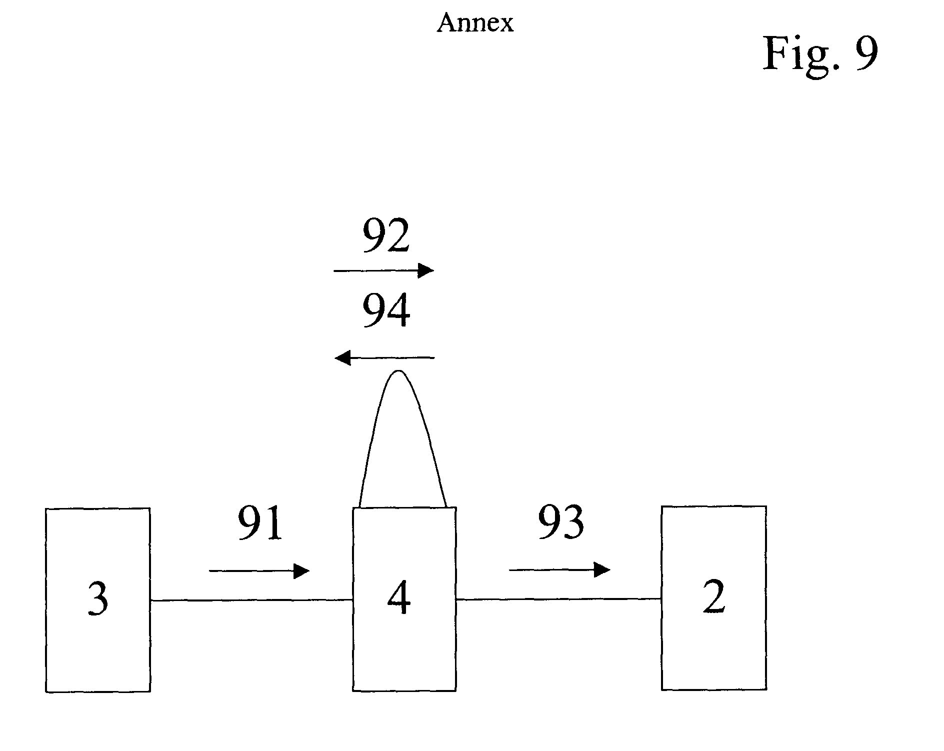

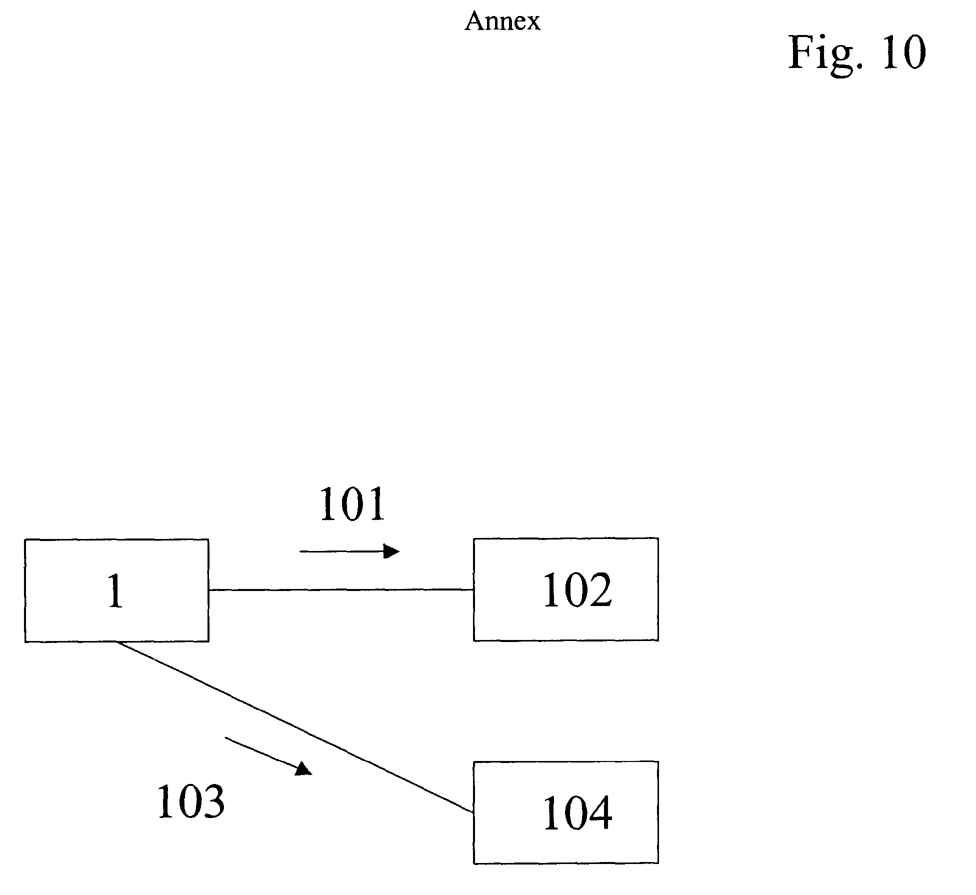

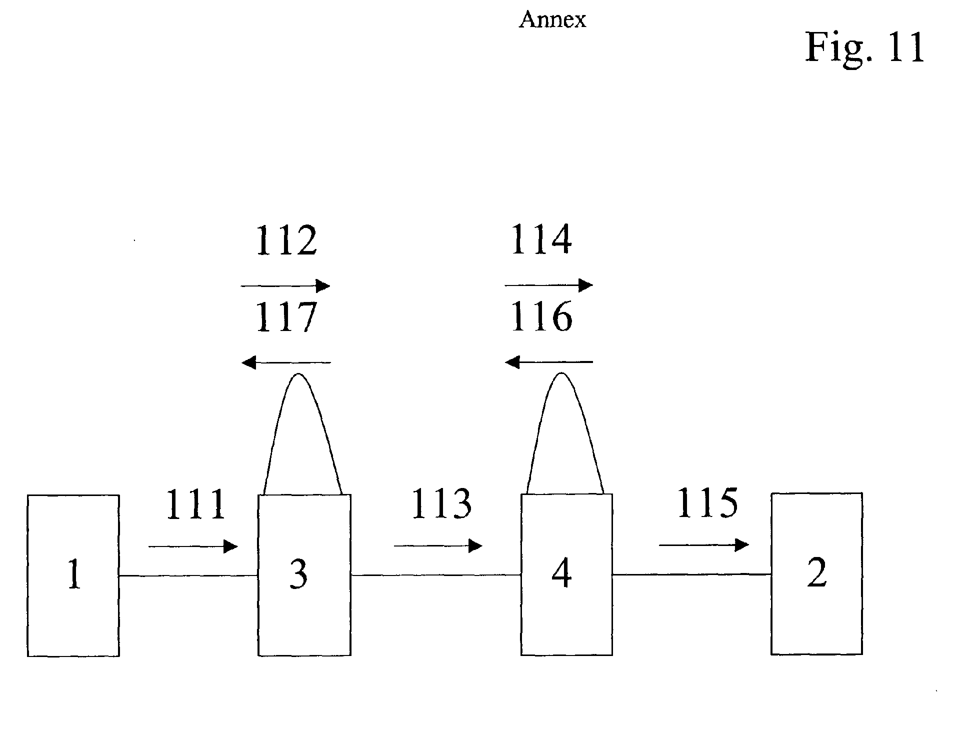

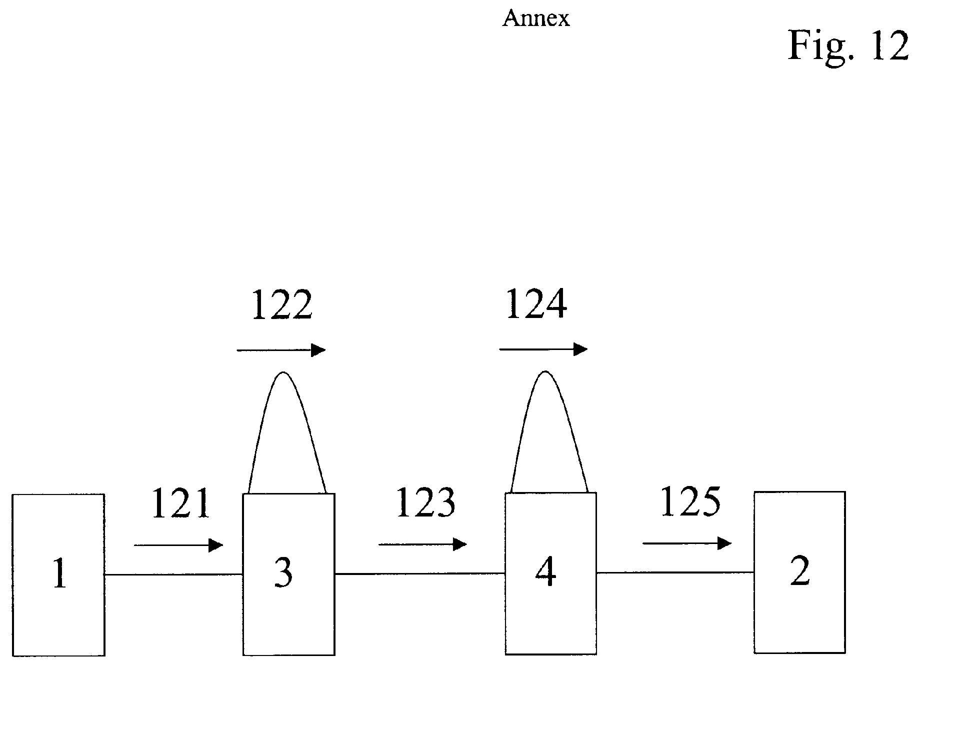

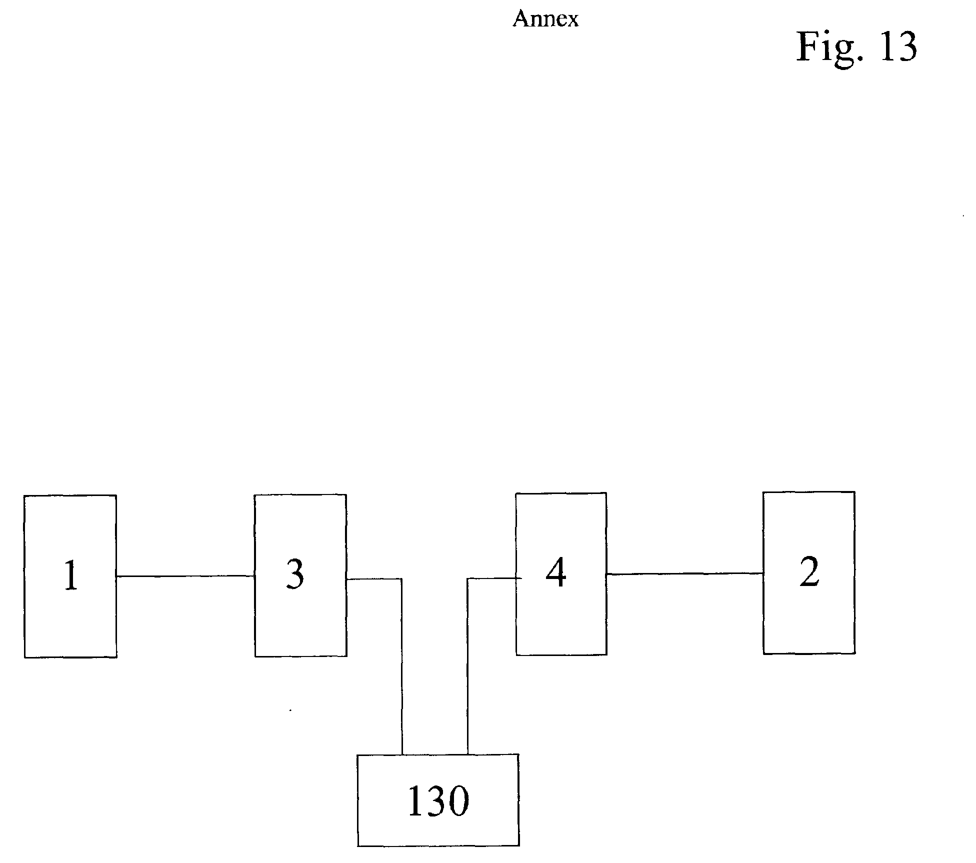

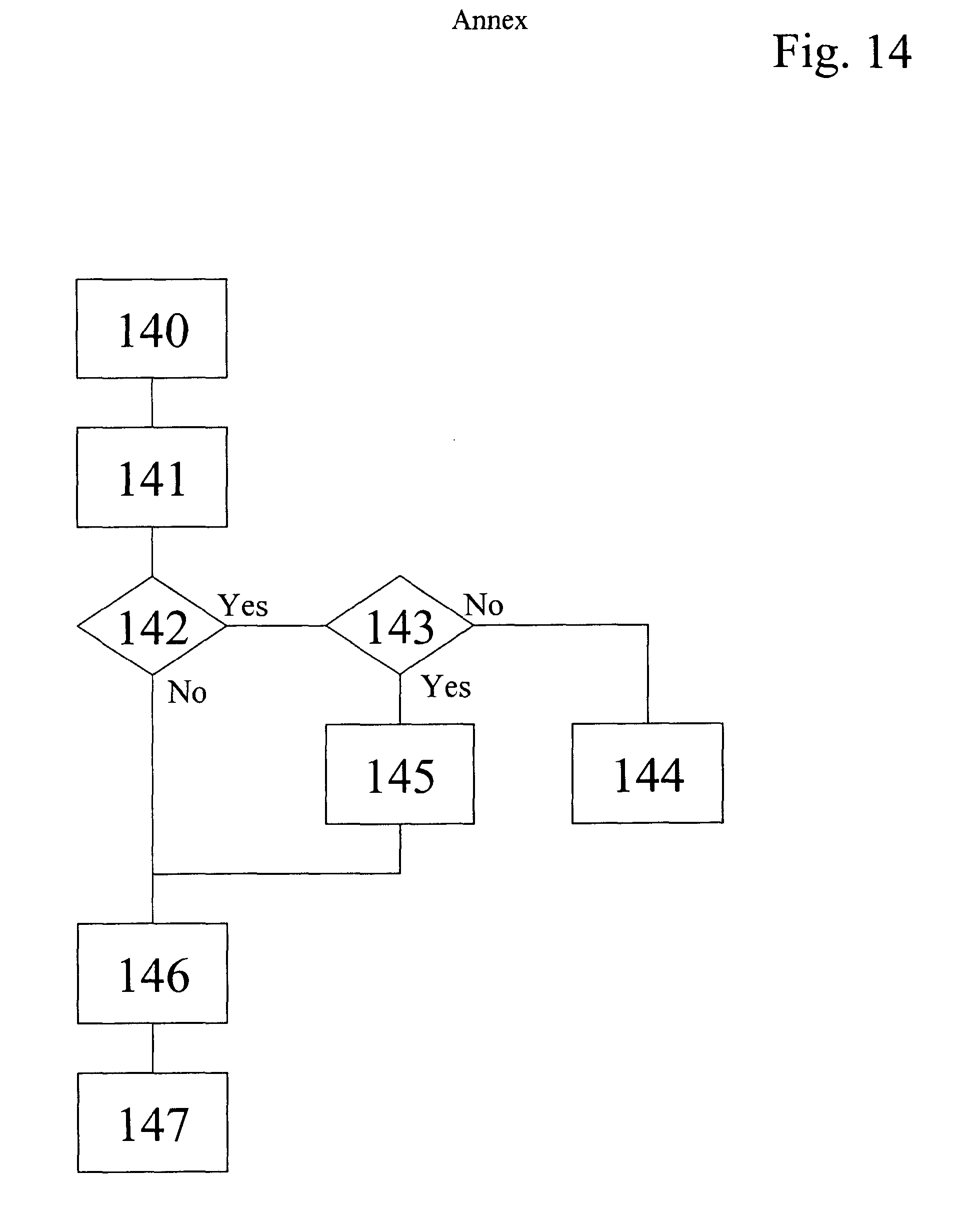

## Claims

1. A method for presenting a runtime environment component service by a first computer system (1) to a second computer system (2) over a communication network (3), said method being performed by said first computer system (1), and comprising the steps of:
a) receiving a request for a runtime environment component service via said communication network (3), said request being generated in said second computer system (2) by a lightweight component (210) corresponding to said runtime environment component service,
b) accessing a runtime environment component (101, 102, 103, 104, 105, 106, 110) being able to provide said requested runtime environment component service,
c) executing said runtime environment component (101, 102, 103, 104, 105, 106, 110) on said first computer system (1) for producing a result according to said received request for a runtime environment component service,
d) transmitting, over said network (3), a response comprising said result to said second computer system (2).

2. A method for providing a runtime environment component service from a first computer system (1) over a communication network (3) to a second computer system (2), said method being executed on said second computer system (2), and comprising the steps of:
a) generating a request for a runtime environment component service by means of a lightweight component (210) of said second computer system (2), wherein said lightweight component (210) corresponds to said runtime environment component service,
b) transmitting said request for said runtime environment component service to said first computer system (1) over said communication network (3), and
c) receiving a response comprising a result according to said requested runtime environment component service, said result being produced by a runtime environment component (101, 102, 103, 104, 105, 106, 110) executed on said first computer system (1) and transmitted with said response by said first computer system (1) over said network (3).

3. A method according to any of the preceding claims, wherein said lightweight component (210) has a small size 1s compared to the total size cs in bytes of the at least one runtime environment components (101, 102, 103, 104, 105, 106, 110) providing a service corresponding to said lightweight component (210) including any auxiliary software programs needed to execute said runtime environment components (101, 102, 103, 104, 105, 106, 110).

4. A method according to claim 3, wherein said size ls is equal or less than ten percent of the total size cs.

5. A method according to any of the preceding claims, wherein said lightweight component (210) may be downloaded from said first computer system (1) to said second computer system (2) over said network (3) in a time t equal or less than (8 N / C_{B}) + t₁, wherein N is the total size in bytes of the at least one runtime environment component (101, 102, 103, 104, 105, 106, 110) providing a service corresponding to said lightweight component (210), C_{B} is the average bandwidth of the network (3), and t₁ is the total time needed to initialize said runtime environment components (101, 102, 103, 104, 105, 106, 110) providing a service corresponding to said lightweight component (210) in the local environment on said first computer system (1) in which it is embedded.

6. A method according to any of the preceding claims, wherein said lightweight component (210) is a non-visual lightweight component.

7. A method according to any of the preceding claims, wherein said lightweight component (210) may be downloaded from said first computer system (1) to said second computer system (2) over said network (3) in a time t equal or less than ten seconds.

8. A method according to any of the preceding claims, wherein said lightweight component (210) is transmitted from said first computer system (1) over said network (3) to said second computer system (2) prior to performing a method of any of the preceding claims.

9. A method according to any of the preceding claims, wherein said runtime environment component services comprise at least one of the following functions: graphic functions, word processing functions, document editing functions, printing functions.

10. A method according to any of the preceding claims, wherein said first computer system (1) is a server system, and said second computer system (2) is a client system.

11. A method according to any of the preceding claims, wherein said runtime environment components (101, 102, 103, 104, 105, 106, 110) comprise at least one application programming interface (API).

12. A method according to any of the preceding claims, wherein said runtime environment component services comprise output services on said second computer system (2).

13. A method according to any of the precedings claims, wherein said request for a runtime environment component service is transmitted by said second computer system (2) into said network (3) by a communication component (200) of said second computer system (2), and wherein said response of said first computer system (1) to said request is transmitted into said network (3) by a communication component (100) of said first computer system (1).

14. A method according to the preceding claim, wherein said communication component (200) is able to generate a stub object (200') and wherein said communication component (100) is able to generate a proxy object (100').

15. A method according to any of the preceding claims, wherein said transmitted request complies with a predetermined communication protocol.

16. A method according to any of the preceding claims, wherein said transmitted request comprises identification data of said first computer system (1), identification data of said second computer system (2), identification data of said runtime environment component service, and input data to said runtime environment component service.

17. A method according to any of the preceding claims, wherein said transmitted result comprises identification data of said first computer system (1), identification data of said second computer system (2), identification data of said runtime environment component service, and output data of said runtime environment component service.

18. A method according to one of the preceding claims, wherein said communication network (3) complies with the Internet protocol http.

19. A method according to any of the preceding claims, wherein said request and said response are transmitted over a secure channel of said communication network (3).

20. A method according to any of the preceding claims, wherein said first computer system (1) has access to runtime environment components (101, 102, 103, 104, 105, 106, 110) which reside on a further computer system.

21. A method according to any of the preceding claims, wherein said request for said runtime environment component service is generated in said second computer system (2) by using a Remote Visualization Process (RVP) (220) and a Abstract Window Toolkit (260).

22. A method according to any of the preceding claims, wherein said request for said runtime environment component service is received in said first computer system (1) by using a Remote Visualization Process (RVP) (120) and a Visual Class Library (VCL) (140).

23. A method according to any of the preceding claims, wherein said response of said first computer system (1) is transmitted to said second computer system (2) by using a Remote Visualization Process (RVP) (120) and a Visual Class Library (VCL) (140).

24. A method according to any of the preceding claims, wherein said response of said first computer system (1) is received in said second computer system (2) by using a Remote Visualization Process (RVP) (220) and a Abstract Window Toolkit (260).

25. A method for presenting runtime environment component services by a first computer system (1) performing the method according to claim 1, to a second computer system (2) performing the method according to claim 2.

26. Data carrier means containing computer software for performing the method according to any of the preceding method claims.

27. A computer system for performing the method according to any of the preceding method claims.

28. A set of runtime environment components (101, 102, 103, 104, 105, 106, 110) for use with a method according to any of the preceding method claims.

29. A data base comprising a set of runtime environment components (101, 102, 103, 104, 105, 106, 110) relating to said runtime environment component services according to any of the preceding method claims.
